# EUROPÄISCHE PATENTANMELDUNG

(11) **EP 1 049 013 A2**
(43) Veröffentlichungstag der Anmeldung: **02.11.2000**
(21) Anmeldenummer: 00108706.3
(22) Anmeldetag: 22.04.2000
(51) Int. Cl.: G06F 9/46

(54) **Interprozesskommunikationssystem**

(30) Priorität: 26.04.1999 DE 19918896
(71) Anmelder: Müschenborn, Hans-Joachim, Dr., 53127 Bonn (DE)
(72) Erfinder: Müschenborn, Hans-Joachim, Dr., 53127 Bonn (DE)
(74) Vertreter: Reichel, Wolfgang, Dipl.-Ing.

(57) **Zusammenfassung**

Bestehende Interprozeßkommunikationssysteme erlauben nur die an die jeweiligen physikalischen Einheiten gebundene Punkt-zu-Punkt-Kommunikation zwischen genau zwei Prozessen. Die Auflösung von einheitenunabhängigen logischen Kennungen erfordert zusätzliche Transaktionen mit Netzwerk-Information- oder Directory-Services. Um mit mehreren Services zu kommunizieren, müssen Clients einzelne Verbindungen zu jedem der Services aufbauen. Die vorliegende Erfindung soll die einheitenunabhängige logische Kommunikation eines Peripherieprozesses mit einer beliebigen Anzahl anderer Peripherieprozesse in heterogenen Netzwerken unter Minimierung der notwendigen Kommunikationsverbindungen erlauben.

Die vorliegende Erfindung realisiert die zugrunde liegende Aufgabe durch hierarchisch verbindbare sternförmige Interprozeßkommunikationssysteme bestehend aus beliebig vielen homogenen oder heterogenen physikalisch verbundenen Einheiten, welche auf einer Zentraleinheit mindestens einen Zentralprozeß - Zentrale - und auf einer der Einheiten Peripherieprozesse ausführen, wobei die Peripherieprozesse über mindestens eine stehende logische bidirektionale Verbindung mit einer Zentrale verbunden sind. Die Zentrale ordnet den Verbindungen der Peripherieprozesse logische Kennungen zu, wodurch die Peripherieprozesse unabhängig von ihren Einheiten mit ausgewählten Peripherieprozessen bzw. Verbindungen kommunizieren und gleichartige Peripherieprozesse für andere Peripherieprozesse transparent gegeneinander ausgetauscht werden können.

Die Erfindung ist anwendbar in privaten verteilten Interprozeßkommunikationssystemen auf der Basis von heterogenen physikalischen Netzwerken, wie dem Internet; Hochleistungsnetzwerken; Netzwerken mit besonderen Anforderungen an Zuverlässigkeit, Verfügbarkeit und Sicherheit im Electronic-Commerce bei der Virtualsierung von weltweiten Organisationen und in weltweiten Informationsmanagement.

## Beschreibung

Die Erfindung betrifft Systeme zur Interprozeßkommunikation in homogenen oder heterogenen Netzwerken gemäß einem der Ansprüche 1 bis 23.

Interprozeßkommunikationsysteme bestehen aus einer oder mehreren Einheiten, welche physikalisch miteinander verbunden sind und zwei oder mehr Prozesse ausführen, die untereinander logische - d.h. von der Art der physikalischen Übertragung unabhängige - Verbindungen aufbauen und über diese logischen Verbindungen Informationen austauschen können. Homogene Systeme umfaßen gleichartige Einheiten, welche von gleichartigen Programmen gesteuert werden. Heterogene Systeme bestehen aus gleich- oder verschiedenartigen Einheiten, welche durch gleich- oder verschiedenartige Programme gesteuert werden, wobei die Netzwerkkomponenten der Steuerungsprogramme ein im gesamten Netzwerk einheitliches Protokoll zum Verbindungsaufbau und zur Informationsübertragung auf jeder am Netzwerk partizipierenden Einheit implementieren.

Nach dem Stand der Technik erfolgt der Aufbau logischer Verbindungen wie folgt:
Eine durch eine eindeutige physikalische Kennung identifizierte Einheit führt einen Prozeß (Server genannt) aus, der mindestens einen logischen Verbindungsendpunkt zur Verfügung stellt, welcher Endpunkt auf der den Server ausführenden Einheit durch eine lokale Kennung eindeutig identifiziert ist, und wartet anschließend bis ein anderer Prozeß (Client), welcher auf derselben oder einer anderen Einheit ausgeführt wird, eine Verbindung zu diesem Endpunkt anfordert. Vorausgesetzt die Einheiten, auf welchen Server und Client ausgeführt werden, sind physikalisch miteinander verbunden, benötigt der Client zum Verbindungsaufbau einerseits die eindeutige Identifikation der Einheit, auf welcher der Server ausgeführt wird, und andererseits die lokale Kennung des Verbindungsendpunktes, welchen der Server zur Verfügung stellt. Beide Informationen zusammen genügen, um den Verbindungendpunkt eines Servers im gesamten Netzwerk eindeutig zu identifizieren. Hat ein Server eine Verbindungsanforderung eines Clients empfangen, entscheidet der Server über die Annahme oder Ablehnung der Anforderung. Eine Verbindung kommt nur zustande, wenn der Server die Anforderung gegebenenfalls nach einer positiv ausgefallenen Überprüfung der Zugangsberechtigung des Clients annimmt. Fällt die Überprüfung der Zugangsberechtigung des Clients negativ aus, bricht der Server den Verbindungsaufbau ab und es kommt keine Verbindung zustande. Nach diesem Mechanismus sind ausschließlich logische Punkt-zu-Punkt Verbindungen zwischen einem Client und einem Server aufbaubar. Logische Verbindungen zwischen zwei Clients, zwei Servern oder mehr als zwei Clients und/oder Servern sind nicht möglich.

Services nach dem Stand der Technik sind transaktionsorientierte Server, welche nach erfolgreichem Verbindungsaufbau auf eine Transaktionsaufforderung seitens eines Clients warten, nach erfolgter Aufforderung eine bestimmte Aktion durchführen und anschließend gegebenenfalls dem Client das Resultat dieser Aktion übermitteln. Der gesamte Vorgang, von der Aufforderung bis zur Übermittlung des Resultates bezeichnet man als eine Transaktion. Die Transaktionsaufforderung des Clients muß nicht notwendigerweise durch eine Nachricht erfolgen, sondern kann bereits durch den Verbindungsaufbau impliziert sein.

Eine Verbindung zwischen Service und Client kann sowohl nur für eine einzige Transaktion (temporäre Verbindung) als auch für mehrere Transaktionen (stehende Verbindung) bestehen. Nach Abschluß aller Transaktionen wird die Verbindung von einem der beiden Transaktionspartnern geschlossen, woraufhin der andere Partner seinerseits die Verbindung schließt.

Ein typisches Beispiel solcher Netzwerke ist das Internet oder Internet-ähnliche Intranets, welche aus mehreren freiprogrammierbaren, physikalisch vernetzten Rechenmaschinen bestehen. Die Steuerung einer jeden Rechenmaschine erfolgt durch ein Betriebssystem, der Netzwerk- sowie den Anwendungsprogrammen. Homogene Systeme umfaßen gleich- oder verschiedenartige Rechenmaschinen welche von gleichartigen Betriebssystemen gesteuert werden. Heterogene Systeme bestehen aus gleich- oder verschiedenartigen Rechenmaschinen welche durch gleich- oder verschiedenartige Betriebssysteme gesteuert werden. Die Netzwerkprogramme sind typischerweise nach dem ISO/OSI-Modell aufgebaut, verwenden das TCP/IP-Protokoll und dienen zum Informationsaustausch zwischen verschiedenen Softwarekomponenten, welche auf derselben oder verschiedenen gleich- oder verschiedenartigen Rechenmaschinen ausgeführt werden. Die obigen Ausführungen zu Client/Server-Systemen im Allgemeinen seien am Beispiel des TCP/IP-Protokolles im folgenden näher erläutert.

Das TCP/IP-Protokoll ist per definitionem ein auf dem ISO/OSI-Modell basierendes, verbindungsorientiertes Protokoll zwischen zwei eindeutig bestimmten logischen Kommunikationspartnern, welches es einerseits erlaubt, logische Punkt-zu-Punkt-Verbindung zwischen einem eindeutig bestimmten Client und einem eindeutig bestimmten Server herzustellen, und andererseits den zuverlässigen physikalischen und logischen Transport der Nachrichten zwischen Client und Server derart garantiert, daß die übertragenen Bytes in derselben Reihenfolge beim Empfänger ankommen, in welcher sie der Sender gesendet hat, unabhängig davon, in wieviele und welche physikalischen Datenpakete eine Nachricht zum physikalischen Transport zerlegt wurde und unabhängig davon, über welchen physikalischen Weg jedes einzelne der Datenpakete im physikalischen Netzwerk übertragen wurde. Ein Verbindungsendpunkt eines TCP/IP-Serverprozesses ist durch die IP-Adresse der Maschine, welche den TCP/IP-Server-Prozeß ausführt, und die Port-Adresse eindeutig bestimmt. Dabei kann die Port-Adresse als auf der jeweiligen Maschine lokal eindeutige logische Adresse verstanden werden. TCP/IP-Serveradressen umfassen also zu ihrer eindeutigen Bestimmung sowohl die physikalische IP-Adresse als auch die lokale logische Port-Adresse, sind also als Tupel (IP-Adresse, Port-Adresse) wegen der IP-Adresse nicht mehr logisch (d.h. unabhängig von physikalischen Einheiten), sondern vielmehr an die TCP/IP-Server-Maschine mit der angegebenen IP-Adresse gebunden.

Typische Vertreter, welche nach dem beschriebenen Client/Server-Prinzip arbeiten, sind die Betriebsysteme Unix, Windows NT, OS/2 oder NetWare, sowie die Middleware DCE, TUXEDO oder CORBA. Folgende Punkte wirken sich bei Netzwerken nach dem Stand der Technik als besonders nachteilig aus:
1. Das Client/Server-Prinzip erlaubt nur Punkt-zu-Punkt-Verbindungen zwischen einem Client und einem Server bzw. Service. Benötigt ein Client mehrere Services, muß er zu jedem Service eine separate Verbindung herstellen.
2. Sollen alle Komponenten eines Interprozeßkommunikationsystems wahlfrei untereinander Verbindungen aufbauen können, muß jede Komponente gleichzeitig als Server und Client ausgelegt sein. Dies erhöht die Zahl der Server und damit das Sicherheitsrisiko dramatisch.
3. Sollen n Komponenten eines Systems untereinander kommunizieren, beträgt die Anzahl der benötigten bidirektionalen Punkt-zu-Punkt-Verbindungen ½n (n-1) und wächst proportional zu ½n². Systeme dieser Art lassen sich nur unter unwirtschaftlich großem Aufwand mit einer großen Anzahl von Komponenten betreiben und sind daher nicht beliebig skalierbar.
4. Die Zuverlässigkeit des Gesamtsystems nimmt mit zunehmender Anzahl von Verbindungen ab, da das Risiko eines Verbindungsunterbruchs mit jeder zusätzlichen Punkt-zu-Punkt-Verbindung zunimmt.
5. Jede Einheit, welche einen Server ausführt, muß im gesamten Netzwerk eindeutig gekennzeichnet sein.
6. Clients müssen die Kennzeichnung der Einheit und die lokale Kennung des Verbindungsendpunktes eines Servers kennen, zu welchem sie eine Verbindung aufbauen wollen. Dies hat zur Folge, daß Server an ihre Einheit gebunden sind und nicht durch gleichartige Server auf anderen Einheiten ersetzt werden können, ohne daß dies den Clients bekannt sein muß. Der für die Clients transparente Ersatz eines Servers durch einen anderen auf einer anderen Einheit ist nach derzeitigem Stand der Technik nicht möglich.
7. In der Praxis stellt jeder Server ein potentielles Sicherheitsrisiko dar, da er alleine dafür verantwortlich ist, eine Verbindungsanforderung und Transaktionsaufforderungen eines Clients anzunehmen bzw. auszuführen. Mit zunehmender Anzahl von Servern steigt auch das Sicherheitsrisiko des Gesamtsystems. Zur Erlangung eines definierten Sicherheitsstandards des Gesamtsystems müssen alle Server die gleichen Sicherheitsanforderungen erfüllen, da das Gesamtsystem nur so sicher ist wie der unsicherste Server.
8. Die Historie des Netzwerkes ist in Systemen nach dem Stand der Technik nur mit sehr hohem Aufwand nachzuvollziehen, da das Netzwerk nur auf physikalischer Ebene überwacht werden kann und die physikalisch übertragenen Daten erst in logisch sinnvolle Einheiten übersetzt werden müssen, bevor sie auf logischer Ebene sinnvolle Nachrichten oder Transaktionen ergeben. Dies gilt in besonderem Maße für Netzwerke auf TCP/IP-Basis, welche nur durch "Sniffen", d.h. direkte Analyse der physikalisch übertragenen Daten, vollständig überwacht werden können.
9. Zur Gewährleistung der Sicherheit bestehender Netzwerke werden derzeit sogenannte Firewalls eingesetzt, welche zwischen Clients und Services geschaltet sind und von bestimmten Quellen nur Nachrichten bestimmten Types passieren lassen, so daß Clients nur zu denjenigen Services Verbindungen aufbauen und Transaktionen durchführen können, für welche sie authorisiert sind. Diese zusätzliche Filterung vermindert die Leistungsfähigkeit des Gesamtsystems.

Diese Probleme seien am Beispiel des TCP/IP-Protokolles veranschaulicht:
1. Ein TCP/IP-Client kann pro Verbindung nur mit genau einem TCP/IP-Server kommunizieren, d.h. ein TCP/IP-Client kann weder mit einem anderen TCP/IP-Client noch über eine einzige Verbindung mit mehreren TCP/IP-Servern kommunizieren.
2. Ein TCP/IP-Server kann pro Verbindung nur einen TCP/IP-Client akzeptieren, d.h. ein TCP/IP-Server kann nicht mit einem anderen TCP/IP-Server oder über eine Verbindung mit mehreren TCP/IP-Clients kommunizieren.
3. Zum Verbindungsaufbau zu einem TCP/IP-Server benötigen TCP/IP-Clients in allen Fällen mindestens die IP-Adresse der TCP/IP-Server-Maschine sowie die Portadresse des TCP/IP-Serverprozeßes, um einen TCP/IP-Serverprozeß eindeutig im gesamten Netzwerk adressieren zu können. Durch die zwingende Angabe der IP-Adresse ist die Verbindung an die jeweilige TCP/IP-Server-Maschine (orts-)gebunden.

Die zugrundeliegende Aufgabe der Erfindung liegt darin, ein Interprozeßkommunikationsystem zu realisieren, welches die obengenannten Nachteile beseitigt, insbesondere die Möglichkeit der einheitenunabhängigen logischen Kommunikation aller Komponenten untereinander bietet und dadurch den für die Clients transparenten Ersatz von Servern erlaubt, gleichzeitig die Übertragungszeit der einzelnen Nachrichten minimiert sowie ein Maximum an Zuverlässigkeit und Sicherheit gewährleistet.

Zur Lösung der Aufgabe bieten sich Netzwerke mit sternförmiger Architektur an. Sternförmige Netzwerke sind prinzipiell bereits aus verschiedenen anderen Anwendungsgebieten bekannt, die jedoch nicht für den Aufbau von logischen Netzwerken auf Prozeßebene geeignet sind, sondern nur für Verbindungen von physikalischen Peripherieeinheiten, wie z.B.: Telefonanlagen (z.B.: DE 4329172, EP 876067, EP 883310), Funknetze (WO 97/36444), physikalische Subnetze (US 5274631), ATM-Netze (DE 19532421/2), Netzwerk-Gateways (US 5596579), und erlauben nach Kenntnis des Autors nicht, mehrere voneinander unabhängige Verbindungen zwischen denselben Peripherieeinheiten bzw. -Prozessen und Zentrale. Auch die logische Adressierbarkeit einzelner Prozesse bzw. Verbindungen unabhängig von den physikalischen Kennungen der Einheiten und lokalen Kennungen der Verbindungsendpunkte ist nach Kenntnis des Autors in keinem System nach dem Stand der Technik realisiert.

Zur Lösung der gestellten Aufgabe dient ein sternförmig aufgebautes Interprozeßkommunikationsystem nach dem Obergriff des Anspruches 1 bestehend aus einer Zentraleinheit, welche einen Zentralprozeß - Zentrale genannt - ausführt und weiteren Prozessen - Peripherieprozesse genannt -, welche beliebig verteilt auf der Zentraleinheit oder einer mindestens mit der Zentraleinheit physikalisch verbundenen Peripherieeinheit ausgeführt werden und über eine oder mehrere stehende logische bidirektionale Kommunikationsverbindungen mit der Zentrale verbunden sind. Die Zentrale ordnet mindestens einer Verbindung eines Peripherieprozesses mindestens eine logische - d.h. an keine bestimmte physikalische Einheit gebundene - Kennung zu, so daß ein Peripherieprozeß allein aufgrund dieser logischen Kennung(en) indirekt über die Zentrale mit mindestens einem bestimmten Peripherieprozeß kommunizieren kann. Die logische Kennung(en) müssen in einem Interprozeßkommunikationsystem nach Anspruch 1 nicht notwendigerweise eine Verbindung oder einen Peripherieprozeß eindeutig kennzeichnen.

Ein Interprozeßkommunikationsystem nach Anspruch 1 ist grundsätzlich zu unterscheiden von Computer- und/oder Telephonnetzwerken nach dem Stand der Technik.

In Computernetzwerke nach dem Stand der Technik, insbesondere basierend auf dem weit verbreiteten IP-Protokoll, leiten Router oder Routerprozesse Nachrichten, welche an eine bestimmte IP-Adresse adressiert sind, an die durch die IP-Adresse eindeutig spezifizierte physikalische Maschine oder Einheit weiter. Die IP-Adresse ist jedoch an die jeweilige physikalische Maschine gebunden und stellt daher keine logische Kennung im Sinne dieser Patentschrift dat. Logische Kennungen nach Anspruch 1 identifizieren hingegen Verbindungen von Peripherieprozessen unabhängig davon, auf welcher physikalischen Einheit sie ausgeführt werden, und erlauben daher die Kommunikation unter den Peripherieprozessen unabhängig von den jeweiligen Ausführungsorten der Kommunikationspartner (also die logische Kommunikation zwischen den Kommunikationspartnern).

Auch für das auf IP aufbauende TCP/IP-Protokoll, dessen lokale Portadresse eines TCP/IP-Servers am ehesten mit einer logischen Kennung nach Anspruch 1 verglichen werden kann, ist die Angabe der IP-Adresse der den TCP/IP-Serverprozeß ausführenden physikalischen Machine zwingend notwendig, um genannten TCP/ IP-Serverprozeß eindeutig im gesamten Netzwerk zu identifizieren. D.h. für TCP/IP ist mindestens das Tupel (IP-Adresse, Portadresse) als eindeutige Kennung eines TCP/IP-Serverprozesses erforderlich, welches wegen der zwingend notwendigen IP-Adresse an die jeweilige physikalische Maschine, die den TCP/IP-Serverprozeß ausführt, gebunden ist und daher keine logische (d.h. ortsunabhängige ) Kennung im Sinne dieses Patentes ist.

EP 0 705 463 B1 beschreibt ein System und Verfahren zur Herstellung von Telekommunikationsverbindungen zwischen Teilnehmern und registrierten Händlern in einem Netzwerk. Das Netz weist im wesentlichen eine Zentraleinheit mit einem Zentralprogram sowie damit über Telefonleitungen verbindbare Teilnehmerendgeräte und Endgeräte von für den Dienst registrierten Händlern auf.

Telephonnetzwerke jeder Art, insbesondere nach EP 0 705 463 B1 oder ISDN, stellen stets eine direkte physikalische Verbindung zwischen den Kommunikationspartnern her. Eine direkte physikalische Verbindung zwischen Peripherieeinheiten untereinander ist jedoch in einem Interprozeßkommunikationsystem nach Anspruch 1 zu keinem Zeitpunkt erforderlich und wird auch zu keinem Zeitpunkt hergestellt. Ein Interprozeßkommunikationsystem nach Anspruch 1 ist demnach von Telephonnetzwerken nach dem Stand der Technik grundsätzlich zu unterscheiden.

Zur Kommunikation in einem Interprozeßkommunikationsystem nach Anspruch 1 genügt es vielmehr, daß eine Peripherieeinheit, welche einen am Interprozeßkommunikationsystem beteiligten Peripherieprozeß ausführt, ausschließlich eine direkte physikalische Verbindung zu der Zentraleinheit besitzt. Dies bedeutet insbesondere, daß ein Interprozeßkommunikationsystem nach Anspruch 1 auch die Kommunikation zwischen Peripherieprozessen in verschiedenen, physikalisch voneinander getrennten physikalischen Netzen ermöglicht, wenn die Zentraleinheit mit beiden physikalischen Netzen physikalisch verbunden ist (z.B.: über zwei unabhängige Netzwerkinterfaces vergleichbar mit einem Gateway oder Firewall). Die Notwendigkeit der direkten physikalischen Verbindung in Telefonnetzwerken nach dem Stand der Technik hat unter anderem zur Folge, daß in Abhängigkeit von den physikalischen Resourcen (Anzahl der unabhängigen parallelen Schalter) der Schaltvorrichtung nur eine begrenzte Anzahl von unabhängigen parallelen direkten physikalischen Verbindungen geschaltet werden können.

In einem Interprozeßkommunikationsystem nach Anspruch 1 werden hingegen überhaupt keine physikalischen Verbindungen geschaltet - daher auch die Bezeichnung "Interprozeßkommunikationsystem" -, so daß die maximale Anzahl der potentiellen logischen Verbindungen nur durch die Speicherkapazität und Verarbeitungsgeschwindigkeit der Zentraleinheit beschränkt ist.

Ein Interprozeßkommunikationsystem nach Anspruch 1 ist auch zu unterscheiden von Virtual Private Networks nach dem Stand der Technik, welche hauptsächlich aus physikalischen Hardware Komponenten und zusätzlicher Verschlüsselungshard- und -software bestehen, um die Sicherheit der Verbindung und der Datenübertragung zwischen zwei Prozessen nach dem traditionellen Client/Server Prinzip zu gewährleisten. Typischerweise sind die Softwarekomponenten von Virtual Private Networks unterhalb von TCP/IP lokalisiert und für Schichten über Schicht 2 des ISO/OSI-Models transparent. Dagegen setzt ein Interprozeßkommunikationsystem nach Anspruch 1 typischerweise auf Schicht 3 des ISO/OSI-Modells (insbesondere auf TCP/IP) auf, da es die zuverlässige logische Nachrichtenübertragung zwischen den Peripherie Prozessen und der Zentrale voraussetzt.

Ein Interprozeßkommunikationsystem nach Anspruch 1 ist auch zu unterscheiden von Netzwerken, welche den Zugang zum Internet ermöglichen, indem sie temporär verbundenen Maschinen (z.B.: über ein Modem) eine temporäre IP-Adresse zuordnen. Feste oder temporäre IP-Adressen identifizieren stets einzelne Maschinen oder Peripherieeinheiten und nicht Peripherieprozesse oder Verbindungen von Peripherieprozessen im Sinne von Anspruch 1.

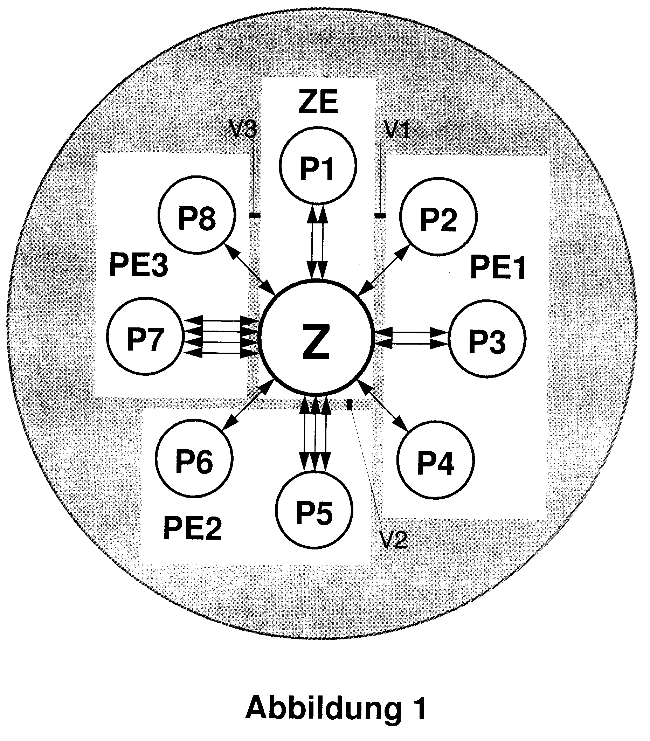

Ein spezielles Ausführungsbeispiel eines Interprozeßkommunikationsystems nach Anspruch 1 veranschaulicht Abbildung 1. Es besteht aus der Zentraleinheit ZE und drei Peripherieeinheiten PE1-PE3, welche jeweils über die physikalischen Verbindungen V1-V3 mit der Zentraleinheit verbunden sind. Die Zentraleinheit führt den Zentralprozeß Z und einen Peripherieprozeß P1 aus, Einheit PE1 die Peripherieprozesse P2-P4, Einheit PE2 die Peripherieprozesse P5 und P6 und Einheit PE3 die Peripherieprozesse P7 und P8. Die Peripherieprozesse P2, P4, P6 und P8 sind über eine, P1 und P3 über zwei, P5 über drei und P7 über vier stehende logische bidirektionale Kommunikationsverbindungen mit der Zentrale verbunden.

Spezielle Ausführungen eines Interprozeßkommunikationsystems nach Anspruch 1 schließen auch den Fall mit ein, daß alle Prozesse auf der Zentraleinheit ausgeführt werden.

Die besonderen Vorteile eines Interprozeßkommunikationsystems nach Anspruch 1 sind, daß
1. die Peripherieprozesse lediglich über eine Verbindung zur Zentrale und über die Kenntnis einer logischen Kennung verfügen müssen, um mit anderen Peripherieprozessen indirekt über die Zentrale zu kommunizieren,
2. jeder Peripherieprozeß gleichzeitig mit mehreren anderen Peripherieprozessen kommunizieren kann, ohne weitere Verbindungen aufzubauen,
3. die Kommunikation unabhängig von der Einheit ist, auf welcher die Peripherieprozesse ausgeführt werden, insbesondere die Kommunikationspartner nicht die physikalischen Einheiten oder die lokalen Verbindungsendpunkte der Kommunika-tionspartner kennen müssen,
4. die Anzahl der benötigten stehenden logischen Kommunikationsverbindungen nur linear mit der Anzahl der Peripherieprozesse ansteigt,
5. alle Nachrichten die Zentrale passieren müssen, so daß die Zentrale auf logischer Ebene die Aktivität im Netzwerk beobachten, die komplette Historie des Netzwerkes chronologisch protokollieren und die Weiterleitung von unauthorisierten Nachrichten verhindern kann,
6. die schnellstmögliche Übermittelung der Nachrichten von einem Peripherieprozeß zu einem anderen gewährleistet ist, da nur stehende Kommunikationsverbindungen verwendet werden und Totzeiten für Verbindungsauf- und abbauten wegfallen, so daß ein Peripherieprozeß lediglich eine Nachricht an die Zentrale senden und die Zentrale diese Nachricht an den Kommunikationspartner weiterleiten muß.

Ansprüche 2 bis 8 charakterisieren den Verbindungsaufbau zwischen der Zentrale und den Peripherieprozessen.

In einem Interprozeßkommunikationsystem nach Anspruch 2 ist die Zentrale zur Annahme einer Verbindung befähigt, und stellt jederzeit mindestens einen freien Verbindungsendpunkt zur Verfügung. Damit die zum Auslösen eines Verbindungsaufbaues geeigneten Peripherieprozesse eine Verbindung zu diesem Endpunkt aufbauen können, muß die Zentraleinheit eine im gesamten Netzwerk eindeutige physikalische - d.h. an eine bestimmte physikalische Einheit gebundene - Kennung und die Verbindungsendpunkte der Zentrale eine auf der Zentraleinheit eindeutige lokale Kennung besitzen. Alle zum Auslösen eines Verbindungsaufbaues geeigneten Peripherieprozesse verfügen über die Kenntnis der Kennung der Zentraleinheit und des Verbindungsendpunktes der Zentrale und initiieren den Verbindungsaufbau von sich aus.

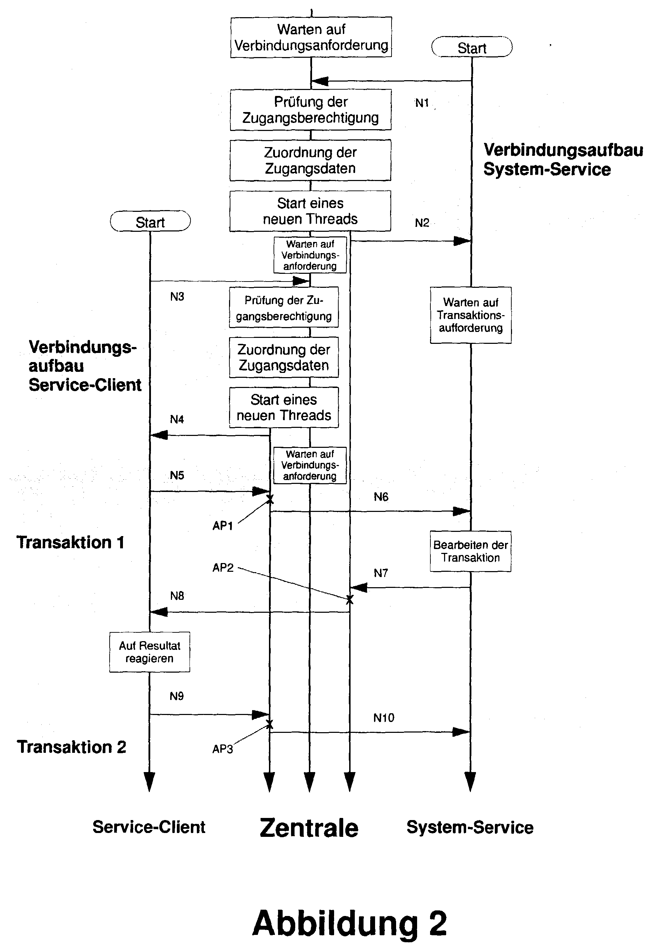

Ein Ausführungsbeispiel des zeitlichen Ablaufes des Verbindungsaufbaus in einem Interprozeßkommunikationsystem nach Anspruch 2 ist im oberen Teil von Abbildung 2 (gekennzeichnet mit "Verbindungsaufbau System-Service" und "Verbindungsaufbau Service-Client") anhand von zwei Peripherieprozessen - System-Service und Service-Client genannt - wiedergegeben. Zu Beginn stellt die Zentrale in ihrem Hauptthread einen freien Verbindungsendpunkt zur Verfügung und wartet auf eine Verbingungsanforderung. Ein Peripherieprozeß fordert unmittelbar nach seinem Start eine Verbindung zur Zentrale an (N1 & N3). Die Zentrale überprüft die Zugangsberechtigung des Peripherieprozesses, ordnet bei positivem Ausfall der Überprüfung der neuen Verbindung spezifische Zugangsdaten zu, startet einen neuen Thread, welcher jede weitere Kommunikation mit dem Peripherieprozeß abwickelt, und schließt den Verbindungsaufbau mit der Übermittelung der Zugangsdaten (N2 & N4) ab. Parallel dazu erzeugt der Hauptthread der Zentrale einen neuen freien Verbindungsendpunkt unter derselben lokalen Kennung wie anfänglicher Verbindungsendpunkt und wartet auf die nächste Verbindungsanforderung, so daß der nächste Peripherieprozeß (Service-Client) nach demgleichen Ablauf seine Verbindung zur Zentrale aufbauen kann. Fällt die Zugangsprüfung negativ aus, bricht die Zentrale den Verbindungsaufbau ab und es kommt keine Verbindung zustande.

In einem Interprozeßkommunikationsystem nach Anspruch 3 ist mindestens ein Peripherieprozeß zur Aufnahme einer Verbindung geeignet und stellt mindestens einen freien Verbindungsendpunkt zur Verfügung. Die Zentrale ist in diesem Fall zum Auslösen eines Verbindungs-aufbaues geeignet und initiiert selbständig Verbindungsaufbauten zu zur Aufnahme einer Verbindung geeigneten Peripherieprozessen. Damit die Zentrale eine Verbindung zu einem Peripherieprozeß aufbauen kann, muß die Einheit, welche den zur Aufnahme einer Verbindung geeigneten Peripherieprozeß ausführt, eine im gesamten Netzwerk eindeutige Kennung, der Verbindungsendpunkt des Peripherieprozesses eine auf der ihn ausführenden Einheit eindeutige lokale Kennung besitzen und beide Kennungen der Zentrale bekannt sein.

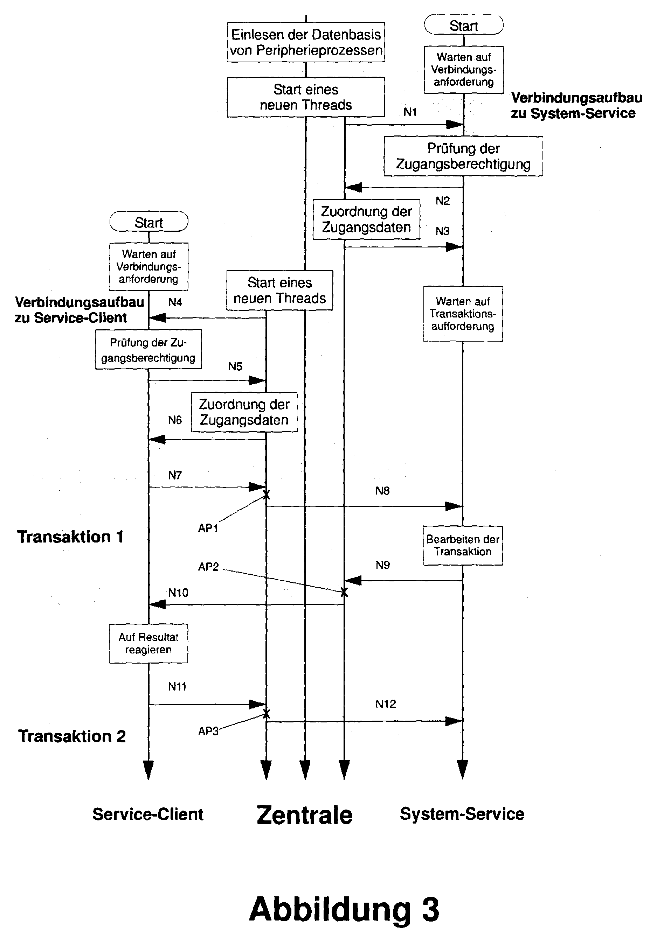

Ein Ausführungsbeispiel des zeitlichen Ablaufes des Verbindungsaufbaus in einem Interprozeßkommunikationsystem nach Anspruch 3 ist im oberen Teil von Abbildung 3 (gekennzeichnet mit "Verbindungsaufbau zu System-Service" und "Verbindungsaufbau zu Service-Client") anhand von zwei Peripherieprozessen - System-Service und Service-Client genannt - wiedergegeben. Die Zentrale liest alle Peripherieprozesse mit ihren physikalischen und lokalen Kennungen aus ihrer Datenbasis ein, zu welchen sie eine Verbindung aufbauen soll. Für jede aufzubauende Verbindung startet die Zentrale einen neuen Thread und sendet eine Anforderung zum Verbindungsaufbau (N1 & N4) an den Peripherieprozeß. Der Peripherieprozeß stellt einen lokal eindeutig gekennzeichneten Verbindungsendpunkt zur Verfügung und wartet auf eine Verbindungsanforderung. Nach Empfang einer Verbindungsanforderung überprüft der Peripherieprozeß die Zugangsberechtigung der Zentrale. Fällt diese Überprüfung negativ aus, bricht der Peripherieprozeß den Verbindungsaufbau ab und es kommt keine Verbindung zustande, fällt genannte Überprüfung positiv aus, akzeptiert der Peripherieprozeß die Verbindung (N2 & N5), und erhält zum Abschluß des Verbindungsaufbaues die Zugangsdaten nach ihrer Zuordnung von der Zentrale übermittelt (N3 & N6). Der Verbindungsaufbau zu weiteren Peripherieprozessen erfolgt nach demselben Schema, wobei die Threads der Zentrale, welche den Verbindungsaufbau durchführen, auch während des Verbindungsaufbaues parallel ausgeführt werden können.

In keinem der Interprozeßkommunikationsysteme nach einem der Ansprüche 2 oder 3 besteht die Möglichkeit der direkten Kommunikation unter den Peripherieprozessen, wenn alle Peripherieprozesse entweder nur zum Auslösen eines Verbindungsaufbaues zur Zentrale geeignet sind oder die zur Aufnahme einer Verbindung geeigneten Peripherieprozesse nur Verbindungen von der Zentrale akzeptieren.

Anspruch 3 umfaßt sowohl den Fall, daß alle Peripherieprozesse zur Aufnahme einer Verbindung geeignet sind und nur Verbindungen von der Zentrale akzeptieren, als auch den Fall, daß ein Teil der Peripherieprozesse nach Anspruch 2 zum Auslösen eines Verbindungsaufbaues zur Zentrale geeignet sind und ein anderer Teil zur Aufnahme einer Verbindung von der Zentrale geeignet sind, wobei die Zentrale von sich aus nur Verbindungen zu Peripherieprozessen aufbaut, welche zur Aufnahme einer Verbindung von der Zentrale geeignet sind.

Besonderere Vorteile eines Interprozeßkommunikationsystemes nach Anspruch 2 sind, daß die Zugangsüberprüfung von der Zentrale durchgeführt wird und es nur einen Zugang zum Gesamtsystem gibt, welcher a) eindeutig lokalisiert ist, b) sehr gut überwacht werden kann und c) mit verhältnismäßig geringem Aufwand absicherbar und wartbar ist. In einem Interprozeßkommunikationsystemen nach Anspruch 3 hingegen führt jeder zur Aufnahme einer Verbindung geeignete Peripherieprozeß seine eigene Zugangsüberprüfung durch, so daß sich die Sicherheitsrisiken allein durch die größere Anzahl von Systemzugängen erhöhen.

In einem Interprozeßkommunikationsystem nach Anspruch 2 müssen die Peripherieeinheiten nicht notwendigerweise im gesamten Netzwerk eindeutig gekennzeichnet sein. Dies verunmöglicht es jedoch zusätzliche Bedingungen für den Zugang zur Zentrale zu stellen, welche die Ausführungseinheit eines Peripherieprozesses einschänken. Diesen Mangel behebt ein Interprozeßkommunikationsystem nach Anspruch 4.

In einem Interprozeßkommunikationsystem nach Anspruch 5 ist die logische Kennung, welche eine Verbindung zu einem Peripherieprozeß von der Zentrale während des Verbindungsaufbaues zugeordnet bekommt, innerhalb der Zentrale für den jeweiligen Peripherieprozeß eindeutig, wodurch die Peripherieprozesse die Möglichkeit erhalten, mit eindeutig bestimmten Peripherieprozessen zu kommunizieren. Baut ein Peripherieprozeß mehrere Verbindungen zur Zentrale auf, erhalten diese dieselbe logische Kennung. Diese Eigenschaft ist besonders dann von Vorteil, wenn ein Peripherieprozeß einem bestimmten Peripherieprozeß Informationen übermitteln möchte und es unerheblich ist, über welche Verbindung diese Informationen zum Ziel gelangen.

In einem Interprozeßkommunikationsystem nach Anspruch 6 ist die logische Kennung, welche eine Verbindung zu einem Peripherieprozeß von der Zentrale während des Verbindungsaufbaues zugeordnet bekommt, innerhalb der Zentrale eindeutig, wodurch die Peripherie-prozesse die Möglichkeit erhalten, mit eindeutig bestimmten einzelnen Verbindungen eines Peripherieprozesses zu kommunizieren. Diese Eigenschaft ist besonders dann von Vorteil, wenn ein Peripherieprozeß mehrere Verbindungen mit unterschiedlichen Funktionalitäten zur Zentrale aufbaut und ein anderer Peripherieprozeß gezielt eine dieser Funktionalitäten nutzen möchte. Die eindeutige logische Adressierbarkeit einzelner Verbindungen ist beispielsweise bei Anspruch 11 von großer Bedeutung.

Ein Interprozeßkommunikationsystem nach Anspruch 7 erlaubt es, die Zugangsbedingungen während der Laufzeit des Systems zu verändern, wobei die bestehenden Verbindungen die neuen Zugangsbedingungen erfüllen müssen, andernfalls abgebrochen werden und gegebenenfalls nach den neuen Zugangsbedingungen erlaubte Verbindungen entweder bei ihrer Anforderung akzeptiert oder automatisch aufgebaut werden. Auch in diesem Zusammenhang ist ein Interprozeßkommunikationsystem nach Anspruch 2 gegenüber einem System nach Anspruch 3 vorzuziehen, da die Zugangsbedingungen in ersterem Fall (Anspruch 2) ausschließlich in der Zentrale vorliegen müssen, während sie im zweiten Fall (Anspruch 3) zu allen Peripherieprozessen kommuniziert werden müssen, welche zur Aufnahme einer Verbindung von der Zentrale geeignet sind.

Anspruch 8 behandelt den Fall eines Verbindungsunterbruches zwischen Peripherieprozeß und Zentrale. In beiden Ansprüchen werden unterbrochene Verbindungen von den entsprechenden Seiten (Peripherieprozeß bei Anspruch 2) bzw. (Zentrale bei Anspruch 3) automatisch sobald wie möglich wieder aufgebaut. Dies setzt natürlich voraus, daß die jeweiligen Prozesse die Fähigkeit besitzen Verbindungsunterbrüche zu detektieren und daß nach einem Verbindungsunterbruch die Voraussetzungen zum erneuten Verbindungsaufbau wieder gegeben sind. Die Detektion eines Verbindungsunterbruches kann beispielsweise durch Auswertung von Fehlersituationen bei der Informationsübertragung über die Verbindungen geschehen oder durch einen separaten Thread realisiert werden, welcher in regelmäßigen Abständen die Funktionsfähigkeit der Verbindungen überprüft. Die Wiederherstellung der Voraussetzung zu einem erneuten Verbindungsaufbau kann entweder automatisch durch das Interprozeßkommunikationsystem selbst erfolgen (siehe auch Anspruch 11) oder einen manuellen Eingriff eines Operators erfordern.

Ansprüche 9 bis 10 betreffen die Art der Nachrichtenübermittlung durch die Zentrale. In einem Interprozeßkommunikationsystem nach Anspruch 9 fügt ein Peripherieprozeß (Sender) einer Nachricht die logische Kennung mindestens einer Verbindung eines Peripherieprozesses (Empfänger) hinzu und sendet die Nachricht zusammen mit den Kennungen der Empfangsverbindungen an die Zentrale. Die Zentrale analysiert die Nachricht nach ihrer Qualität und den Empfangsverbindungen und leitet die Nachricht gegebenenfalls nach einer positiv ausgefallenen Authorisierungsprüfung via der in der Nachricht angegebenen Empfangsverbindungen an die Empfänger weiter. Dabei ist es unerheblich, ob die logischen Kennungen der Empfangsverbindungen eindeutig sind oder nicht. Sind die logischen Kennungen mehrdeutig, leitet die Zentrale die Nachricht an mindestens eine der Empfangsverbindungen mit der angegebene Kennung weiter. Ferner ist auch der Fall eingeschlossen, daß die Kennung der Sendeverbindung als Empfangskennung in der Nachricht enthalten ist. In diesem Fall leitet die Zentrale die Nachricht auch an die Sendeverbindung weiter (Loop-Back). Loop-Back-Nachrichten sind zum Beispiel im Zusammenhang mit Guards (Anspruch 11) zum Testen der Funktionsfähigkeit der Zentrale von Bedeutung.

Anspruch 9 spezifiziert auch, wie die Zentrale mit Nachrichten verfährt, welche keine logischen Kennungen von Empfangsverbindungen enthalten. Eine Zentrale nach Anspruch 9 kann auch vor der Weiterleitung den Nachrichten die logische Kennung der Sendeverbindung hinzufügen, so daß die Empfänger mit der Nachricht auch die logische Kennung der Sendeverbindung erhalten und dem Sender gegebenenfalls antworten können. Ansprüche 9 und 10 legen auch fest, wie die Zentrale mit Nachrichten verfährt, deren Authorisierungsprüfung negativ ausfiel (Anspruch 9), die an einen temporär nicht mit der Zentrale verbunden Empfänger gerichtet sind (Anspruch 10) und den Sender darüber informiert, an welche Empfangsverbindungen eine Nachricht weitergeleitet wurde bzw. an welche Empfangsverbindungen eine Nachricht nicht weitergeleitet werden konnte (Anspruch 9).

Anspruch 11 charakterisieren spezielle Peripherieprozesse - System-Service, Service-Client und Guard genannt -, deren Verbindungen sich unabhängig vom Verbindungsaufbau zur Zentrale in ihrer Funktionalität unterscheiden. Die Interaktion zwischen Service-Client und System-Service erfolgt auf Basis sogenannter Transaktionen, welche aus einer Transaktionsaufforderung, die der Service-Client via der Zentrale an einen System-Service schickt, der Transaktionsausführung seitens des System-Services und gegebenenfalls eines Transaktionsresultates, welches der System-Service via der Zentrale an den Service-Client schickt, bestehen. System-Services sind in dem Sinne passiv aufgebaut, in dem sie nach dem Verbindungsaufbau mit der Zentrale auf eine Transaktionsaufforderung eines Service-Clients warten, nach Eintreffen einer solchen Aufforderung vordefinierte Aktionen durchführen, gegebenenfalls ein Resultat an den Sender der Transaktionsaufforderung senden und anschließend auf die nächste Transaktionsaufforderung warten. Service-Clients spielen dagegen in dem Sinne eine aktive Rolle, in dem sie zuerst Transaktionsaufforderungen an System-Services senden, anschließend gegebenenfalls das Resultat der Transaktion empfangen und in Abhänigigkeit von dem empfangenen Resultat und ihrer sonstigen Aufgaben gegebenenfalls weitere Transaktionen durchführen.

Anspruch 11 beschreibt auch spezielle Peripherieprozesse - Guards genannt -, welche Überwachungsfunktionen wahrnehmen und bei festgestelltem Fehlverhalten Maßnahmen einleiten, um den Fehler automatisch zu beheben oder an andere Peripherieprozesse oder einen Operator zu melden. So kann ein Guard, welcher beispielsweise in regelmäßigen Abständen die Funktionsfähigkeit der Zentrale mit Hilfe von Loop-Back-Nachrichten überprüft, ein Fehlverhalten der Zentrale feststellen und zur Korrektur die Zentrale terminieren und erneut starten. Auch die Überwachung von wichtigen System-Services ist mit Hilfe von Guards realisierbar, welche als Service-Clients ausgeprägt sind, zur Überwachung der System-Services gezielte Test-Transaktionen durchführen und im Falle eines Fehlers den betreffenden System-Service terminieren und gegebenenfalls auf einer anderen Einheit erneut starten.

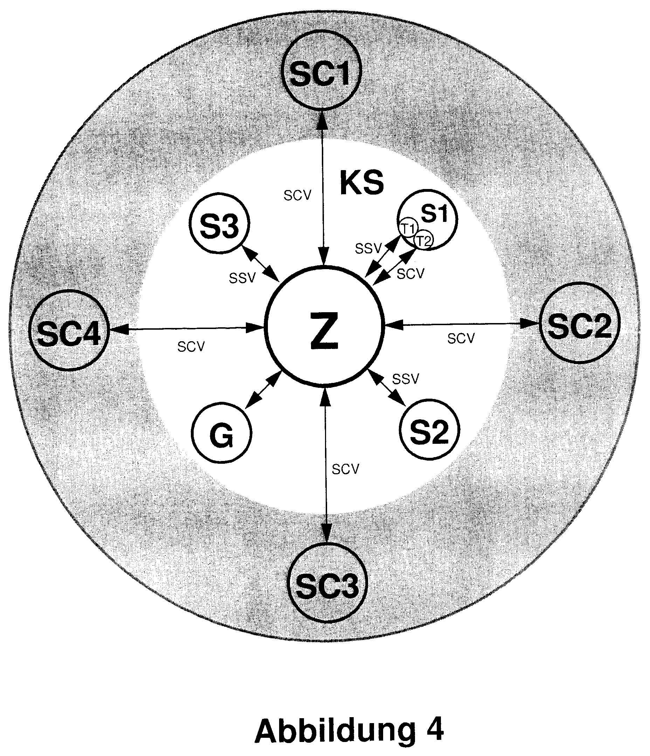

Abbildung 4 illustriert ein Ausführungsbeispiel eines Interprozeßkommunikationsystems nach den Anspruch 11. Die Zentrale Z ist mit drei System-Services S1-S3, einem Guard G und vier Service-Clients SC1-SC4 verbunden. Alle Service-Clients, der Guard und System-Services sind nach Anspruch 11 geartet. System-Service S1 unterhält gleichzeitig in Thread T1 eine System-Service-Verbindung SSV und in Thread 2 eine Service-Client-Verbindung SCV zur Zentrale. Die Zentrale, der Guard und die System-Services bilden zusammen das Kernsystem KS. Aus Sicht der Service-Clients bildet das Kernsystem eine "Black Box", welche ihnen nach einem Verbindungsaufbau die Funktionalitäten der System-Services zur Verfügung stellt.

Der zeitliche Ablauf einer Transaktion in einem Interprozeßkommunikationsystem nach Anspruch 2 und 11 ist im unteren Teil der Abbildung 2 ("Transaktion 1" bzw. erster Teil von "Transaktion 2") dargestellt. Der Service-Client sendet die Transaktionsaufforderung zusammen mit der Kennung des System-Services an die Zentrale (N5 bzw. N9), welche die Nachricht in dem für den Service-Client gestarteten Thread empfängt. Nach einer positiv ausgefallen Authorisierungsprüfung AP1 (bzw. AP3) leitet die Zentrale die Nachricht an den adressierten System-Service weiter (N6 bzw. N10). Der System-Service empfängt seinerseits die Aufforderung, führt in Abhängigkeit von der Aufforderung eine vordefinierte Aktion durch und sendet das Resultat dieser Aktion zusammen mit der Kennung des Service-Clients an die Zentrale (N7), welche ihrerseits wiederum die Nachricht gegebenenfalls nach einer positiv ausgefallenen Authorisierungsprüfung AP2 an den Service-Client weiterleitet. Mit dem Empfang des Transaktionsresultates seitens des Service-Clients ist die Transaktion abgeschlossen, wonach der Service-Client auf das Resultat reagiert und gegebenenfalls die nächste Transaktion initiiert ("Transaktion 2"). Transaktion 2 ist auf der Abbildung 2 nicht mehr vollständig dargestellt und verdeutlicht lediglich die zeitliche Sequenz der Transaktionen.

Trotz des unterschiedlichen Verbindungsaufbaues, unterscheidet sich der zeitliche Ablauf einer Transaktion in einem Interprozeßkommunikationsystem nach Anspruch 3 und 11 nicht gegenüber dem oben dargestellten Transaktionsablauf (siehe auch unterer Teil von Abbildung 3 ("Transaktion 1" bzw. erster Teil von "Transaktion 2"). Hier bezeichnen N7 bzw. N11 die Übertragung der Transaktionsaufforderung vom Service-Client zur Zentrale, N8 bzw. N12 die Weiterleitung der Aufforderung an den System-Service, N9 die Übertragung des Transaktionsresultates an den Service-Client und AP1-AP3 die jeweiligen Authorisierungsprüfungen vor der Weiterleitung der Nachrichten seitens der Zentrale.

Die Unterscheidung zwischen aktiven (Service-Clients) und passiven (System-Services) Peripherieprozessen hat vor allem das Ziel Deadlocks zu verhindern, welche beispielsweise dann auftreten, wenn ein Prozeß eine Transaktionsaufforderung erhält während er auf das Resultat einer selbstinitiierten Transaktion wartet. In diesem Zusammenhang ist besonders die Kombination eines System-Services und eines Service-Clients in einem Peripherieprozeß von großer Bedeutung: Benötigt ein System-Service Informationen anderer System-Services, ist es vorteilhaft die Transaktionen mit anderen System-Services in einem parallelen Thread über eine separate Verbindung zur Zentrale durchzuführen über welche der System-Service als Service-Client gegenüber anderen System-Services auftritt. Dies setzt natürlich voraus, daß die beiden Verbindungen des System-Services unterschiedliche Kennungen von der Zentrale zugeordnet bekommen, damit potentielle Sender sie unterscheiden können. So lassen sich Deadlock-Situationen, Timing-Probleme oder Fehlinterpretationen eintreffender Nachrichten von vorne herein sehr einfach und effizient vermeiden.

System-Services nach einem der beschriebenen Ansprüche haben gegenüber traditionellen Services nach dem Client/Server-Prinzip folgende entscheidenden Vorteile:
1. ein System-Service benötigt nur eine Verbindung zur Zentrale,
2. der Zugang zu einem System-Service erfolgt indirekt über die Zentrale, so daß die Zentrale den gesamten Nachrichtenverkehr überwachen und gegebenenfalls nicht authorisierte Transaktionsaufforderungen blockieren kann, wodurch Firewalls überflüssig werden,
3. ein System-Service ist nicht an eine bestimmte Einheit und einen bestimmten Verbindungsendpunkt gebunden sondern allein über seine logische Service-Kennung adressierbar,
4. die Verwaltung der logischen Kennungen erfolgt in der Zentrale und bedarf keiner zusätzlichen Transaktionen seitens eines Service-Clients, so daß eine explizite Auflösung von logischen Namen über Network-Information-, Directory- oder ähnliche Services entfallen kann,
5. ein System-Service kann für die Service-Clients transparent durch einen gleichartigen auf derselben oder einer anderen Einheit ausgeführten System-Service ersetzt werden,
6. die Verfügbarkeit des Kernsystems kann durch gleichartige redundante System-Services erhöht werden (siehe weiter unten und Anspruch 13),
7. mit einer einzigen Verbindung zur Zentrale erhalten Service-Clients die Möglichkeit mit allen System-Services zu kommunizieren, so daß der häufige und zeitaufwendige Verbindungsauf- bzw. abbau zu bzw. von oder die Unterhaltung meherer paralleler Verbindungen zu verschiedenen traditionellen Services entfallen kann,
8. zur Durchführung einer Transaktion werden lediglich vier Nachrichten über das physikalische Netzwerk übertragen, wodurch die Transaktionszeit gegenüber traditionellen Systemen erheblich verkürzt wird.

Letzerer Punkt kann jedoch bei großen Nachrichtenvolumina und ungünstig ausgelegten physikalischen Netzwerkverbindungen im Vergleich zum direkten Informationsaustausch zwischen traditionellen Client/Service-Systemen das gesamte über das physikalische Netzwerk übertragene Informationsvolumen signifikant erhöhen, da in traditionellen Systemen abgesehen vom Verbindungsauf- und abbau zwei Nachrichten für eine Transaktion ausreichen.

In einem Interprozeßkommunikationsystem nach den bisher besprochenen Ansprüchen bildet, wie in jedem sternförmigen System, die Zentrale einen Single Point of Failure, d.h. ein Ausfall der Zentrale führt zu einem totalen Systemausfall. Der Ausfall eines oder mehrerer System-Services dagegen führt in der Regel lediglich zu einem Ausfall von Teilfunktionalitäten des Kernsystems. Durch gegenseitige Abhängigkeiten können auch in letzerem Fall andere prinzipiell noch funktionsfähige Teilbereiche betroffen sein. Beides, der Ausfall der Zentrale oder eines System-Services, ist für Mission Critical Anwendungen nicht akzeptabel. Eine Verbesserung der Zuverlässigkeit kann duch redundante Zentralen (Anspruch 12) oder redundante System-Services (Anspruch 13) erreicht werden.

Ein Interprozeßkommunikationsystem nach Anspruch 12 besitzt zwei oder mehrere redundante Zentralen, zu welchen die Peripherieprozesse gleichzeitig parallele Verbindungen aufbauen können. Bei Ausfall einer Zentrale leiten die Peripherieprozesse unmittelbar ihre Nachrichtenströme über eine der anderen Zentralen, so daß das Gesamtsystem ohne Totzeit weiterarbeitet. Nach Wiederverfügbarkeit der ausgefallenen Zentrale bauen alle Peripherieprozesse ihre Verbindung zu der wieder zur Verfügung stehenden Zentrale erneut auf, wonach das Gesamtsystem wieder seinen ursprünglichen Zustand erreicht.

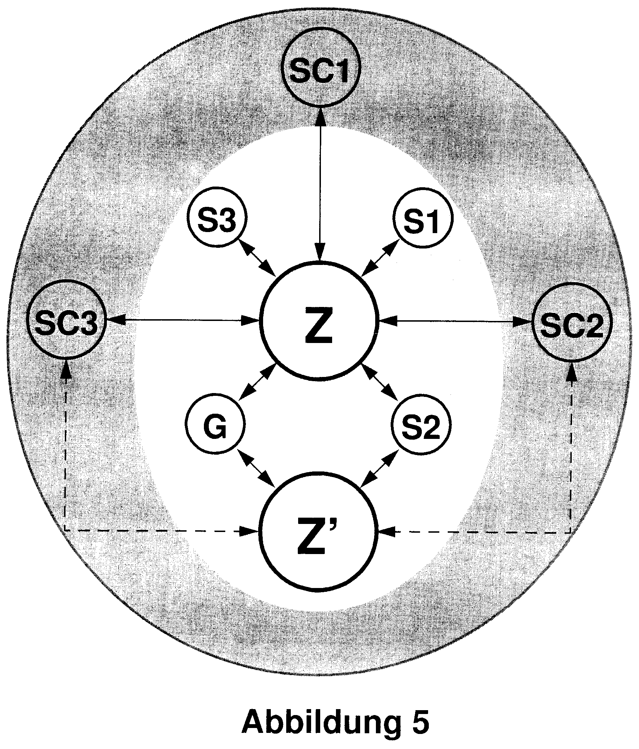

Abbildung 5 illustriert ein Beispiel eines Interprozeßkommunikationsystems nach Ansprüchen 2 und 12. Zentrale Z bildet die primäre Zentrale des Systems, Zentrale Z' läuft zur Sicherheit parallel zu Z im Hintergrund. Beide Zentralen werden von Guard G überwacht und im Fehlerfall erneut gestartet. System-Service S2 unterhält parallele Verbindungen zu Z und Z*'*. Service-Clients SC2 & SC3 wickeln ihren Nachrichtenverkehr zunächst ausschließlich über Z ab. Bei Ausfall von Z schalten sie selbsttätig auf Z' um und können ohne Ausfallzeit weiter mit System-Service S2 kommunizieren. System-Services S1 & S3 dagegen unterhalten keine Verbindung zu Z' und sind nach einem Ausfall von Z nicht mehr erreichbar. Guard G detektiert den Ausfall von Z und startet Z erneut. Sobald Z wieder zur Verfügung steht, bauen G, S1-S3, SC1 - SC3 ihre Verbindungen zu Z wieder auf, wonach das System wieder in seinem ursprünglichen Zustand vollständig zur Verfügung steht. Service-Client SC1 ist ausschließlich mit Z verbunden und kann bei einem Ausfall von Z mit keinem anderen Peripherieprozeß kommunizieren, solange bis Z wieder zur Verfügung steht und alle Verbindungen zu Z erneut aufgebaut wurden.

Anspruch 13 kennzeichnet ein Interprozeßkommunikationsystem nach den vorherigen Ansprüchen dessen Zuverläßigkeit durch redundante System-Services weiter erhöht werden kann. In einem solchen System können mehrere gleichartige System-Services gleichzeitig mit einer oder mehreren Zentralen verbunden sein. Jede Zentrale ordnet allen gleichartigen System-Services, welche gleichzeitig mit ihr verbunden sind, dieselbe logische Kennung - Service-Kennung genannt - zu. Schickt ein Service-Client eine Transaktionsaufforderung an diese Service-Kennung, bestimmt die Zentrale, zu welchen System-Services die Aufforderung weitergeleitet und wie das Transaktionsresultat ermittelt werden soll.

Zur Bestimmung des Transaktionsresultates bei redundanten System-Services, gibt es mehrere Strategien, welche in den Ansprüchen 14 und 15 beschrieben sind.
1. Jede Zentrale leitet die Transaktionsaufforderung an genau einen der mit ihr verbundenen gleichartigen System-Services weiter, welcher anschließend die Transaktion ausführt und gegebenefalls das Resultat an den Service-Client sendet.
2. Jede Zentrale leitet die Transaktionsaufforderung an mindestens einen der mit ihr verbundenen gleichartigen System-Services weiter. In diesem Fall schickt jeder der System-Services, welcher die Transaktionsaufforderung erhalten hat, gegebenenfalls ein Transaktionsresultat an die Zentrale.
3. Jede Zentrale leitet die Transaktionsaufforderung an alle mit ihr verbundenen gleichartigen System-Services weiter und bestimmt genau einen der gleichartigen System-Services als Master-System-Service, welcher gegebenenfalls das Transaktionsresultat an den Service-Client sendet.

Die Bestimmung des endgültigen Transaktionsresultates von einer Mehrzahl verschiedener Einzelresultaten kann entweder
1. nach dem Mehrheitsprinzip erfolgen: d.h. das Endresultat wird dasjenige Einzeiresultat, welches mehr als 50% der System-Services liefern, und falls keine absolute Mehrheit zu Stande kommt, als "undefiniert" bestimmt oder
2. nach dem Proporzprinzip erfolgen: d.h. das Endresultat wird das häufigste Einzelresultat und, falls dies nicht eindeutig ist, als "undefiniert" bestimmt.

Die Bestimmung des Endresultates von einer Mehrzahl von Einzelresultaten kann sowohl durch die Zentrale als auch durch den Service-Client erfolgen.

Bei redundanten System-Services ist es besonders vorteilhaft, wenn die Transaktionsresultate von keinen durch vorherige Transaktionen bestimmten internen Daten eines System-Services abhängen. In diesen Fällen ist es unerheblich, welcher der redundanten System-Service die Transaktion ausführt.

Hängt dagegen das Resultat der durchzuführenden Transaktion von internen Daten des System-Services ab, welche sich gegebenenfalls aus vorherigen Transaktionen ergeben, müssen die internen Daten aller gleichartigen System-Services stets untereinander synchronisiert werden, da sonst verschiedene gleichartige System-Services verschiedene Transaktionsresultate zu derselben Transaktion liefern würden und nicht gegeneinander ausgetauscht werden können.

Den Vorgang der Synchronisierung der internen Daten gleichartiger System-Services betreffen Ansprüche 15. Die Zentrale leitet zu diesem Zweck alle Transaktionsaufforderungen an alle gleichartigen System-Services derselben Service-Kennung weiter, woraufhin alle gleichartigen System-Services ihre internen Daten aktualisieren. Damit ist zwar die fortlaufende Aktualisierung der internen Daten gleichartiger System-Services gesichert, jedoch noch nicht ihre tatsächliche Übereinstimmung, da die System-Services eventuell von verschiedenen Datenständen ausgegangen sind oder eine oder mehrere Transaktionsaufforderungen nicht erhalten haben, z.B. wegen temporärem Ausfall. Erst der direkte Abgleich der internen Daten zwischen Master-System-Service und Hintergund-System-Services garantiert, daß alle gleichartigen System-Services zu einem gegebenen Zeitpunkt über dieselben internen Daten verfügen. Der beste Zeitpunkt für einen solchen Abgleich ist unmittelbar nach dem Start eines Hintergrund-System-Service. Auch ein regelmäßiger Datenabgleich, z.B.: während transaktionsarmen Zeiträumen, ist trotz des sequentiellen Nachführens von Zeit zu Zeit aus Konsistenzgründen vorteilhaft. Mit Hilfe des punktuellen Abgleiches und dem sequentiellen Fortschreiben kann gewährleistet werden, daß die internen Daten gleichartiger System-Services zu jedem Zeitpunkt übereinstimmen. Dies ist eine wichtige Voraussetzung damit gleichartige System-Services mit internen Daten zu jedem Zeitpunkt gegeneinander ausgetauscht werden können.

Master-System-Services gelten nur für die jeweilige Verbindung zu einer bestimmten Zentrale als solche. Ist ein System-Service mit mehreren Zentralen verbunden, kann er durchaus bei der einen Zentrale als Master-System-Service agieren und bei der anderen als Hintergrund-System-Service.

Bei Ausfall eines Master-System-Service bestimmt die Zentrale automatisch einen der gleichartigen Hintergrund-System-Services als neuen Master-System-Service. Dieser Vorgang erfolgt für die Service-Clients vollkommen transparent und praktisch ohne Totzeit. Nach Neustart des ausgefallenen System-Services, meldet sich dieser wieder bei allen Zentralen an, mit welchen er vorher verbunden war. Existiert zu diesem Zeitpukt noch kein Master-System-Service dergleichen Art an einer Zentrale, erfolgt die Wiederanmeldung an dieser Zentrale als Master-System-Service, andernfalls im Hintergrund-Modus. Anschließend steht das System wieder in seiner ursprünglichen Konfiguration vollständig zur Verfügung.

Alternativ zu dem beschriebenen Verfahren zur Synchronisierung der interen Daten gleichartiger System-Services besteht die Möglichkeit, diese Daten nicht intern innerhalb eines System-Services zu speichern, sondern an einem von allen anderen gleichartigen System-Services zugänglichen Ort. Dies könnte beispielsweise ein nichtflüchtiges Speichermedium oder ein anderer System-Service sein. In diesen Fällen können die gleichartigen System-Services wie System-Services ohne interne Daten behandelt werden.

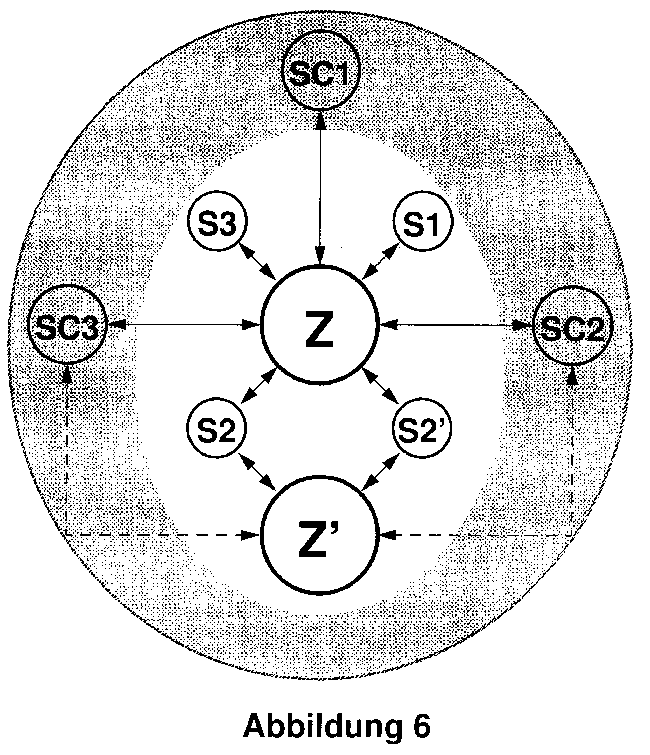

Abbildung 6 stellt eine spezielle Implementierung eines Interprozeßkommunikationsystems nach Anspruch 13 dar. In diesem System werden zwei System-Services vom Typ S2 parallel ausgeführt (S2 und S2'). Beide bauen sowohl Verbindungen zur Zentrale Z als auch zur Backup-Zentrale Z' auf und erhalten von Z und Z' die Service-Kennung "S2" zugeordnet. Zunächst leitet Zentrale Z alle Transaktionsaufforderungen an Service-Kennung "S2" an S2 weiter. Bei Ausfall von S2 werden alle weiteren Transaktionsaufforderungen automatisch an S2' umgeleitet und ausgeführt. Nach erneutem Start verbindet sich S2 wieder mit Z und Z', wonach die Transaktionen wieder durch S2 durchgeführt werden können. Das Beispiel übersteht auch den gleichzeitigen Ausfall von Z und S2, da mit Z' und S2' unmittelbar verfügbare Alternativen bereitstehen. Dies gilt jedoch nicht für System-Services S1 und S3, da sie nicht mit Z' verbunden sind und nach einem Ausfall von Z nicht mehr erreichbar sind.

Die maximale Anzahl von Peripherieprozessen, welche mit einer Zentrale gleichzeitig verbunden sein können, ist mindestens durch die der Zentralen zur Verfügung stehenden Ressourcen (wie z.B.: Hauptspeicherkapazität oder Anzahl der Verbindungsendpunkte) nach oben beschränkt. Werden mehr Peripherieprozesse benötigt als eine Zentrale handhaben kann, besteht die Möglichkeit mehrere Interprozeßkommunikationsysteme mit eigenen Zentralen parallel laufen zu lassen. Eine solche Konfiguration bildet jedoch noch kein Gesamtsystem, sondern lediglich eine Menge unabhängiger Einzelsysteme, welche nicht untereinander kommunizieren können.

Ansprüche 16 bis 22 beschreiben Interprozeßkommunikationsysteme, welche mindestens aus zwei untereinander zu einer beliebigen Topologie verbundenen Subsystemen bestehen. Dabei kann die Verbindung der Zentralen der Subsysteme - Subzentralen genannt - direktoder indirekt über einen Peripherieprozeß - Link genannt - (Anspruch 16) erfolgen. Ansprüche 17 und 18 betreffen die eindeutige Identifizierung der Subzentralen, Links und Peripherieprozesse in einem aus mehreren Subsystemem aufgebauten Interprozeßkommunikationsystem und die Weiterleitung der Nachrichten vom Subsystem des Senders zu den Empfängern in anderen Subsystemen, Anspruch 19 die Kriterien - Politik genannt -, unter welchen Nachrichten an ein anderes Subsystem weitergeleitet werden dürfen, Anspruch 20 die Möglichkeit, daß ein Peripherieprozeß gleichzeitig mit den Zentralen mehrerer Subsysteme verbunden ist.

Erst ein Interprozeßkommunikationsystem mit direkten oder indirekten Verbindungen zwischen den Zentralen der Einzelsysteme sowie einer Weiterleitung der Nachrichten über diese Verbindungen ermöglicht den Peripherieprozessen verschiedener Einzelsysteme unter-einander zu kommunizieren. Die Art der logischen Vernetzung der Einzelsysteme (logische Topologie) kann unter Beachtung der Ressourcenbeschränkungen jeder einzelnen Zentrale beliebig gewählt und an die besonderen Anfordernisse einer konkreten Anwendung angepaßt werden. Dabei definiert die logische Topologie zusammen mit der Übertragungspolitik einzelner Links bzw. Zentralen, welche Nachrichten von welchen Peripherieprozessen eines Subsystems an welche Peripherieprozesse eines anderen Subsystems weitergeleitet werden dürfen.

Die Weiterleitung der Nachrichten zu Empfängern in anderen Subsystemen als das Subsystems des Senders, setzt natürlich voraus, daß die Empfänger eindeutig durch den Sender spezifiziert werden können. Da die logischen Kennungen der Peripherieprozesse bzw. deren Verbindungen nach den Ansprüchen 2 bis 15 nur innerhalb einer Zentrale definiert sind, kann die Adressierbarkeit aller Peripherieprozesse bzw. deren Verbindungen innerhalb des gesamten Netzwerkes nur durch zusätzliche Maßnahmen erreicht werden. Zu diesem Zweck sind mehrere Methoden anwendbar, welche auch die Weiterleitung der Nachrichten bestimmen bzw. von ihr abhängen:
1. Jede Zentrale besitzt mindestens eine in ihrer unmittelbaren Umgebung - d.h. für alle mit der Zentrale direkt oder indirekt verbundenen Zentralen - eindeutige Kennung. In diesem Fall ist ein Pfad zwischen Sender und Empfänger eindeutig durch die Folge der Zentralen beschrieben, über welche die Nachricht weitergeleitet werden muß, um von der Zentrale des Senders die Zentrale des Empfängers zu erreichen (Anspruch 17). Sicherer, aber nicht zwingend notwendig, ist natürlich eine im gesamten Netzwerk eindeutige Kennung jeder Zentrale. Falls zusätzlich jeder Peripherieprozeß oder dessen Verbindungen über im gesamten Netzwerk eindeutige logische Kennungen verfügt(en) - periphere Kennungen genannt -, läßt sich in jeder Subzentrale eine Routingdatenbasis speichern, welche zu jeder peripheren Kennung den Pfad zu der entsprechenden Subzentrale enthält (Anspruch 17), so daß die Sender zur Spezifikation der Empfänger lediglich die peripheren Kennungen angeben müssen und die Subzentrale des Senders die peripheren Kennungen der Nachrichtenempfänger über die Routingdatenbasis in reale Pfade umsetzen kann, um sie anschließend den Pfaden der Empfänger entsprechend weiterzuleiten.
2. Jeder Link besitzt eine innerhalb seiner unmittelbaren Umgebung - d.h. für alle mit dem Link verbundenen Zentralen - eindeutige Kennung und verbindet genau zwei Zentralen untereinander (Anspruch 18). Eine lokal eindeutige Kennung der Zentralen oder global eindeutige Kennung der Links ist nicht erforderlich, da jeder Link Nachrichten von einer Zentrale stets an die (eindeutig bestimmte) andere mit ihm verbundene Zentrale weiterleitet. In diesem Fall ist der Pfad zwischen Sender und Empfänger eindeutig durch die Folge der lokalen Linkkennungen beschrieben, über welche die Nachricht weitergeleitet werden muß, um von der Zentrale des Senders die Zentrale des Empfängers zu erreichen.
   Falls zusätzlich jede periphere Kennung im gesamten Netzwerk eindeutig ist, läßt sich wie unter 1. in jeder Subzentrale eine Routingdatenbasis speichern, welche zu jeder peripheren Kennung den Pfad zu der entsprechenden Subzentrale enthält, so daß die Sender zur Spezifikation der Empfänger lediglich die peripheren Kennungen angeben müssen und die Subzentrale des Senders die peripheren Kennungen der Nachrichtenempfänger über die Routingdatenbasis in reale Pfade umsetzen kann, um sie anschließend den Pfaden der Empfänger entsprechend weiterzuleiten.
3. Jede periphere Kennung ist von sich aus im gesamten Netzwerk eindeutig. Die periphere Kennung alleine spezifiziert jedoch nicht, mit welcher Zentrale der Empfänger verbunden und wie diese Zentrale von einer anderen Zentrale zu erreichen ist. Da ferner weder Links noch Zentralen in diesem Fall eine spezielle Kennung besitzen, kann die Nachricht nur dann zuverlässig an alle Empfänger zugestellt werden, wenn sie sukkzessive von einer Zentrale an die nächste weitergeleitet wird und jede Zentrale die Nachricht an alle mit ihr verbundenen Empfänger weiterleitet, solange bis die Nachricht an alle Empfänger weitergeleitet wurde, oder alle Zentralen im Gesamtsystem die Nachricht mindestens einmal erhalten haben. Dies setzt natürlich voraus, daß alle Zentralen im gesamten System die Nachricht nach einer endlichen Anzahl von Weiterleitungen mindestens einmal erhalten. Aus Gründen der Effizienz ist diese Methode nur sinnvoll für Ringtopologien mit relativ wenigen Subsystemen anwendbar.

Die Subzentralen können die Routingdatenbasis auch untereinander austauschen und ihre eigene in Abhängigkeit der anderen anpassen, um zum Beispiel Änderungen der System-Konfiguration nachzuvollziehen.

Bei allen oben erwähnten Methoden zur Weiterleitung der Nachrichten zwischen verschiedenen Subsystemen ist zu beachten, daß verschiedene zwischen Sender und Empfänger mögliche Pfade im allgemeinen nicht äquivalent sind, da sie sich einerseits in ihrer Länge und andererseits in der Übertragungspolitik unterscheiden können (Anspruch 19). So kann die Weiterleitung einer Nachricht beispielsweise nach einem Pfad erlaubt sein, ein Link bzw. eine Zentrale innerhalb eines andereren möglichen Pfades zwischen demselben Sender und demselben Empfänger die Weiterleitung hingegen verbieten.

Nur falls die Übertragungspolitik aller Zentralen und Links im gesamten Netzwerkes übereinstimmt, sind verschiedene Pfade zwischen demselben Sender und demselben Empfänger äquivalent, so daß bekannte automatische Routingalgorithmen, welche z.B.: stets den zeitlich oder entfernungsmäßig kürzesten Pfad zwischen Sender und Empfänger suchen, angewendet werden können.

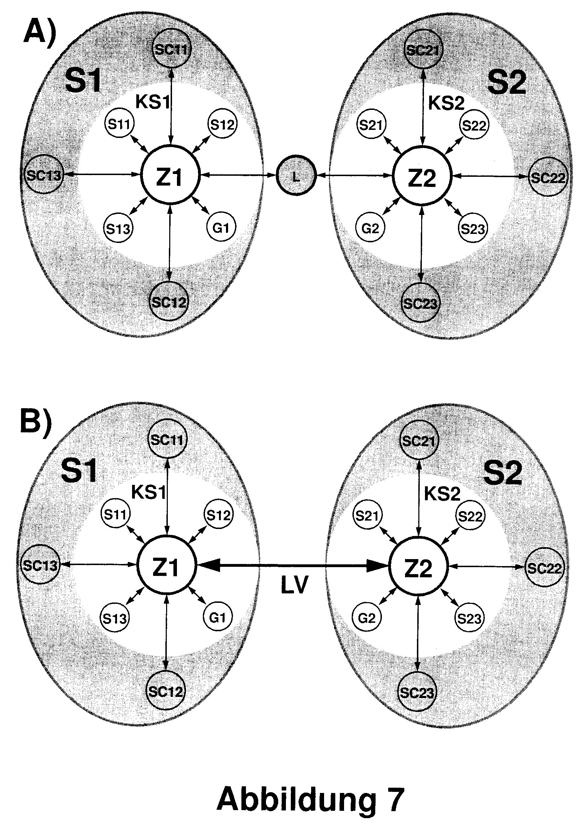

Abbildung 7 zeigt jeweils ein Interprozeßkommunikationsystem nach Anspruch 16, welches aus zwei unabhängigen Subnetzen S1 und S2 bestehen, die im Fall A über einen Link L nach bzw. im Fall B durch eine direkte Verbindung LV zwischen den Zentralen miteinander verbunden sind, so daß Peripherieprozesse aus beiden Subsystemen untereinander kommunizieren können. Die weiteren Kennzeichnungen der Abbildungen bedeuten im einzelnen: SC11-SC13 die Service-Clients, S11-S13 die System-Services, G1 einen Guard und Z1 die Zentrale von System S1, SC21-SC23 die Service-Clients, S21-S23 die System-Services, G2 einen Guard und Z2 die Zentrale von System S2. KS1 und KS2 bilden das jeweilige Kern-System der beiden Systeme. Falls es die Übertragungspolitik des Links L bzw. der Zentralen gestattet, haben in den dargestellten Systemen beispielsweise Service-Clients SC11-13 und System-Services S11-S13 Zugriff auf System-Services S21-S23. Allerdings benötigen Peripherieprozesse aus Subsystem S1 zur Adressierung der System-Services in Subsystem S2 zusätzlich zu den logischen Kennungen der System-Services auch die logische Kennung der Zentrale Z2, damit der Link L Nachrichten von Zentrale Z1 an Z2 (A) bzw Zentrale Z1 Nachrichten direkt an Z2 (B) weiterleiten kann. Umgekehrt gilt dies natürlich auch für Peripherieprozesse aus Subsystem S2, welche System-Services von Subsystem S1 nutzen wollen.

Auf diese Weise lassen sich beispielsweise Prozeßsteuerungen vorteilhaft in zwei Bereiche aufteilen, einen weitgehend automatisierten Teilbereich, welcher im 24h Betrieb laufen muß, und einen benutzerintensiven Teilbereich, welcher nicht ganz so hohe Anforderungen an die Zuverlässigkeit stellt, wegen vielfältigerer Transaktionsmöglichkeiten jedoch größere Sicherheitsrisiken als der automatisierte Teil birgt. Beide Teilbereiche können durch verschiedene miteinander verbundene Subsysteme realisiert werden. Dabei stellen die Verbindungen mit ihrer Politik sicher, daß nur authorisierte Benutzer authorisierter Komponenten authorisierte Transaktionen aus dem benutzerintensivem Teil in dem automatischen Teil durchführen können. Vorteilhaft sind in diesem Zusammenhang zum Beispiel die Kontrolle wichtiger Systemparameter oder administrative Eingriffe in den automatisierten Teil.

Links und Zentralen nach Anspruch 16 haben auch die Möglichkeit parallele Verbindungen zu Zentralen von mehr als zwei verschiedenen Subsystemen aufzubauen und je nach ihrer Politik alle Subsysteme untereinander zu verbinden. Die maximale Anzahl der Zentralen, welche ein Link miteinander verbindet bzw. mit einer Zentrale verbunden sein können, ist nur durch die Ressourcen des Links bzw. der Zentrale(n) nach oben beschränkt.

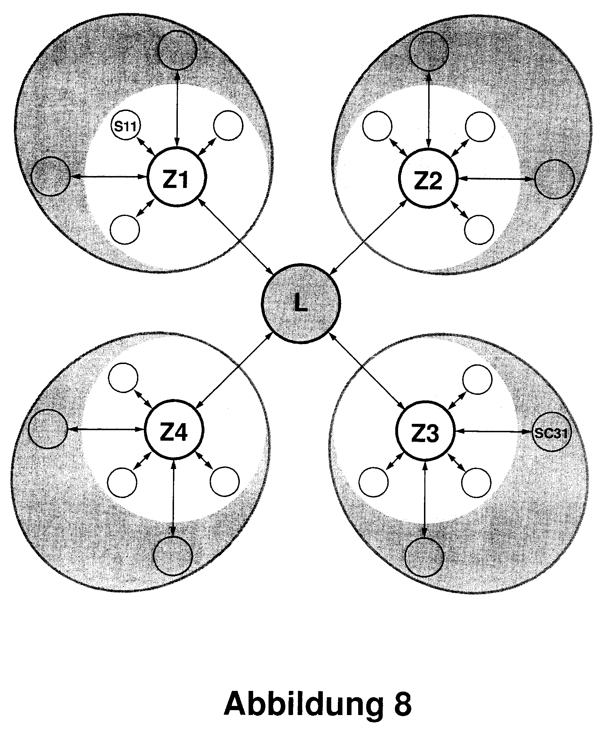

Ein Ausführungsbeispiel eines Interprozeßkommunikationsystems mit einem Link, welcher gleichzeitig vier Subsysteme untereinander verbindet ist in Abbildung 8 wiedergegeben. Jeder Zentrale ist eine eindeutige Kennung Z1-Z4 zugeordnet. Der Link L teilt jeder Zentrale mit, welche anderen Zentralen über ihn zu erreichen sind. Die Adressierung erfolgt in diesem Beispiel nach den eindeutigen Kennungen der Zentralen. So erreicht Service-Client SC31 System-Service S11 über den Pfad Z3-Z1-S11. Z3 leitet Nachrichten mit Adresse Z3-Z1-S11 an L weiter, da Z3 weiß, daß Z1 über L zu erreichen ist. Der Link leitet die Nachricht an Z1 weiter und Z1 sendet sie schließlich mit der Kennung des Senders Z1-Z3-SC31 an S11. Nach demselben Mechanismus erreicht S11 SC31 über Z1-Z3-SC31.

Die folgenden Ausführungen gelten für alle Interprozeßkommunikationsysteme, welche aus mehreren untereinander verbundenen Subsystemen bestehen, unabhängig davon, ob die Subsysteme direkt oder indirekt verbunden sind. Sie seien der Einfachheit am Beispiel der Verbindungen mit Hilfe von Links formuliert, können aber sinngemäß unmittelbar auf direkt verbundene Systeme übertragen werden, wobei jeder bivalente Link durch eine und jeder multivalente Link durch mehrere direkte Verbindungen ersetzt werden muß.

Sollen n Subsysteme untereinander kommunizieren, muß ein Link bis zu n² unidirektionale bzw. ½n2 bidirektionale Verbindungen unter den Subsystemen realisieren. Bei einer großen Anzahl von Subsystemen führt dies leicht zu Übertragungsengpässen innerhalb des Links. In solchen Fällen ist es sinnvoller, mehrere Links mit weniger Übertragungswegen vorzusehen, welche auf unterschiedlichen Einheiten ausgeführt werden und gegebenenfalls optimierte physikalische Netzverbindungen nutzen können. Im Extremfall verbindet jeder Link nur zwei Zentralen miteinander, so daß bis zu ½n(n-1) Links benötigt werden, um sicherzustellen, daß jedes Subsystem direkt mit jedem anderen kommunizieren kann. Die Anzahl der notwendigen bivalenten Links kann durch geeignete Topologien reduziert werden. So erlaubt beispielsweise eine ringförmige Topologie jedem Subsystem die Kommunikation mit allen anderen, wobei Nachrichten gegebenenfalls mehrfach weitergeleitet werden müssen.

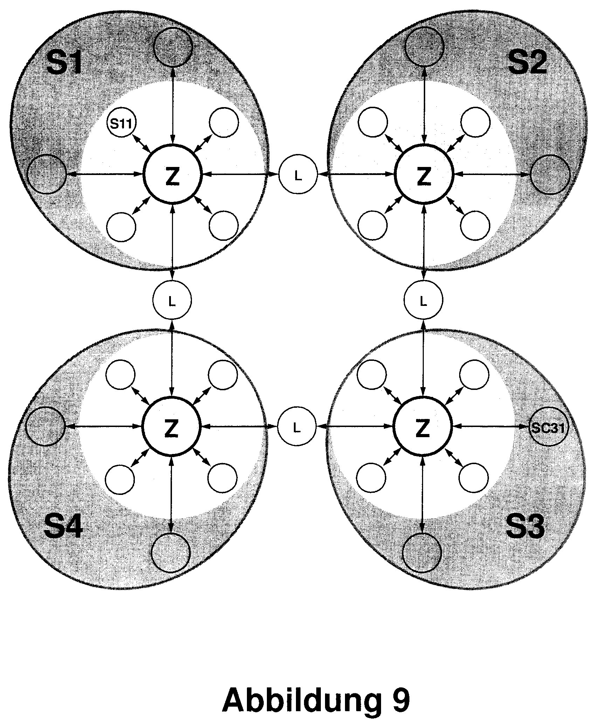

Abbildung 9 stellt ein Interprozeßkommunikationsystem dar, welches aus vier über Links L in Ringtopologie untereinander verbundenen Subsystemen S1-S4 besteht. Weder Links noch Zentralen sind logische Kennungen zugeordnet. Nachrichten, welche SC31 an S11 schickt, werden von der Zentrale des Subsystems S3 über einen der beiden Links an die nächste Zentrale (des Subsystems S2 oder S4) weitergeleitet. Diese prüft ob die Nachricht lokale Empfänger besitzt und leitet die Nachricht in derselben Richtung an die folgende Zentrale (Zentrale von S1) weiter. Letztere Zentrale leitet die Nachricht schließlich an S11 weiter und vernichtet sie anschließend, wenn sie keine weiteren Empfänger mehr enthält. Nachrichten, welche unbekannte Empfänger enthalten, werden bis zur Zentrale des Sende-Systems (S3) weitergeleitet, welche die Nachricht entweder direkt vernichtet oder mit den unbekannten Empfängern an den Sender zurückschickt.

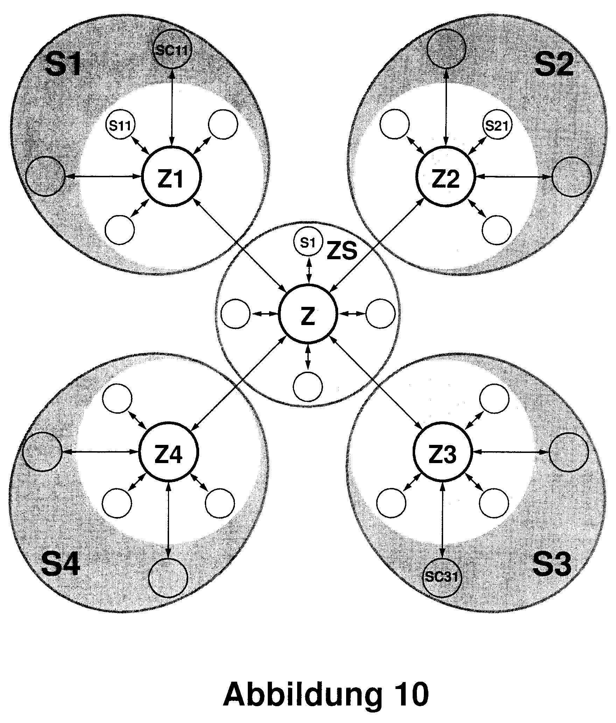

Die minimale Anzahl von Intersubsystem-Links erreicht man durch Einführung weiterer Subssysteme analog zur sternförmigen Topologie im Falle der Kommunikation innerhalb eines Subsystems. Abbildung 10 illustriert dies am Beispiel von vier Subsystemen S1-S4, welche durch ein zentrales Subsystem ZS untereinander verbunden sind. Alle Peripherieprozesse sind von allen anderen über maximal 3 Zentralen zu erreichen. Das zentrale Subsystem ZS befindet sich logisch gesehen auf einer höheren Ebene als die peripheren Subsysteme S1-S4, da von ihm aus alle Peripherieprozesse nur über maximal 2 Zentralen erreichbar sind. SZ ist nicht nur auf direkte oder indirekte Verbindungen zu anderen Subzentralen beschränkt, sondern kann auch System-Services (wie S1) oder andere Peripherieprozesse enthalten, welche von den peripheren Subsystemen aus über maximal 2 Zentralen erreichbar sind. So erreicht Service-Client SC11 System-Service S1 über den Pfad Z1-Z-S1 und S21 über Z1-Z-Z2-S21 und Service-Client SC31 System-Service S11 über den Pfad Z3-Z-Z1-S11 und S21 über Z3-Z-Z2-S21. Umgekehrt kann beispielsweise S21 an S11 über den Pfad Z2-Z-Z1-S11 antworten.

Durch Einführung weiterer Zwischenebenen, deren Subsysteme ihrerseits in frei wählbarer Topologie miteinander verbunden sind, läßt sich ein erfindungsgemäßes Interprozeßkommunikationsystem nach einem der Anspruch 16 für beliebig viele Subsysteme und Peripherieprozesse konfigurieren. Auch die gleichzeitige Verwendung direkter und indirekter Verbindungsmethoden ist nach Anspruch 16 in einem Gesamtsystem möglich.

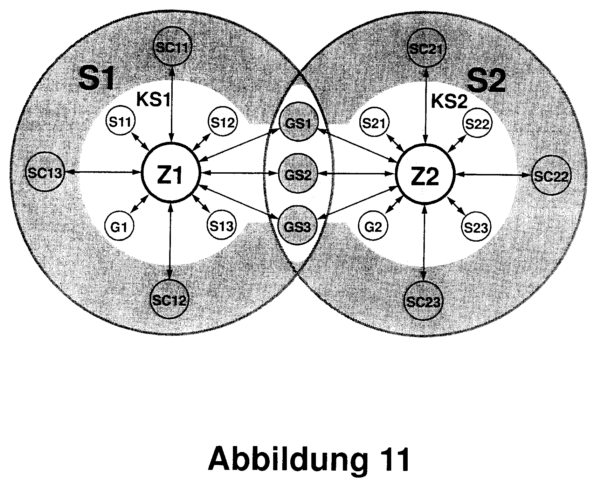

Ein Peripherieprozeß in einem Interprozeßkommunikationssystem nach Anspruch 20, insbesondere ein System-Service, besitzt die Möglichkeit parallele Verbindungen zu mehreren Zentralen verschiedener Subsysteme aufzubauen. Dies geschieht am vorteilhaftesten indem der Peripherieprozeß für jede Verbindung einen separaten Thread startet. Mit Hilfe solcher Peripherieprozesse lassen sich Interprozeßkommunikationsysteme realisieren, in welchen ansonsten disjunkte Einzelsysteme auf gemeinsame System-Services zugreifen, ohne daß Nachrichten eines Einzelsystems an andere Einzelsysteme weitergeleitet werden können. System-Services nach Anspruch 20, stellen ihre Funktionalität allen Einzelsystemen zur Verfügung, zu welchen sie in Verbindung stehen, wobei sie innerhalb eines Einzelsystems nicht von anderen System-Services zu unterscheiden sind. Auch die Frage, ob ein System-Service ausschließlich einem Einzelsystem zur Verfügung steht oder Verbindungen zu anderen Einzelsystemen unterhält, ist von anderen Peripherieprozessen des Einzelsystems nicht entscheidbar. Abbildung 11 stellt zwei Subsysteme S1 und S2 dar, welche nicht untereinander kommunizieren können, da ihre Zentralen Z1 und Z2 weder direkt noch über einen Link miteinander verbunden sind. System-Services GS1 - GS3 unterhalten parallele Verbindungen zu beiden Zentralen und sind somit in beiden Systemen gleichzeitig verfügbar. Dagegen können System-Services S11, S12, S13 nicht von Service-Clients SC2x und System-Services S21, S22 und S23 nicht von Service-Clients SC1y erreicht werden.

Eine besonders vorteilhafte Anwendung gemeinsamer System-Services ist Electronic-Commerce: Ein Anbieter bietet System-Services an, welche parallele Verbindungen zu mehreren Kunden-Einzelsystemen unterhalten. Die Kundensysteme können weder miteinander kommunizieren noch kennen sie ihre gegenseitige Existenz. Dennoch können alle Peripherieprozesse der Kunden-Einzelsysteme auf die angebotenen System-Services über stehende logische Verbindungen zugreifen, als ob sie alleiniger Bestandteil eines Kunden-Einzelsystems seinen. Gleichzeitig kontrollieren die gemeinsamen System-Services selbst, zu bzw. von welchen Einzelsystemen sie Verbindungen aufbauen bzw. akzeptieren, so daß kein unauthorisierter Kunde Zugang zu den gemeinsamen System-Services erhält. Diese Technik eröffnet vollkommen neue Märkte für Online-System-Service-Anbieter.

Erfordert ein System-Service-Anbieter zusätzlich die Kontrolle über die jeweils aus den verschiedenen Einzelsystemen getätigten Transaktionen, läßt sich besonders vorteilhaft ein System nach Abbildung 10 einsetzen, welches in zwei Hierarchieebenen aufgeteilt ist. Hier könnte der System-Service-Anbieter im Zentralsystem ZS die angebotenen System-Services zur Verfügung stellen. Jede Transaktion eines der Peripherieprozesse der peripheren Subsysteme muß von Zentrale Z an die gemeinsamen System-Services weitergeleitet werden und kann in Abhängigkeit von der Geschäftspolitik des Anbieters von Z freigeschaltet oder blockiert werden. So hat der System-Service-Anbieter stets die vollständige Kontrolle welcher Peripherieprozeß welche Transaktionen mit den gemeinsamen System-Services durchführen darf. Gleichzeitig kann Z sämtliche Transaktionen beispielsweise zu Abrechnungs- oder Dokumentationszwecken protokollieren. Nachteilig gegenüber dem direkten Einsatz von gemeinsamen System-Services ist jedoch, daß alle peripheren Subsysteme theoretisch mit allen im gemeinsamen Zentralsystem zur Verfügung gestellten System-Services kommunizieren können, so daß nicht eine für jeden Kunden spezifische Menge von System-Services angeboten werden kann. Allerdings läßt sich dieser Nachteil auf der Ebene der Transaktionsauthorisierungen beheben.

In Interprozeßkommunikationsystemen nach Anspruch 21 kann ein Peripherieprozess auf wichtige Systeminformationen zugreifen und geeignete Massnahmen ergreifen, wenn bestimmte Bedingungen auftreten. Solch ein Peripherieprozess wird vorteilhaft als System-Service realisiert, um Fernadministration oder kontrollierte Transaktionen zu erlauben. Jedoch ist eine Realisation als Service-Client und/oder Guard für Spezialanwendungen auch möglich.

Interprozeßkommunikationsysteme nach den beschriebenen Ansprüchen 1 bis 21 sind in dem Sinne dynamisch, als ihre Zentralen zu jedem Zeitpunkt die Verfügbarkeit aller Peripherieprozesse und somit stets der aktuelle Zustand des Gesamtsystems bekannt ist. Derartige Interprozeßkommunikationsysteme besitzen jedoch noch nicht die Fähigkeit, ihre logische Struktur - d.h ihre Topologie und/oder die Übertragungspolitiken der Links bzw. Zentralen und/oder die Authorisierungsprüfungen innerhalb einer Zentrale und/oder die Zugangsbedingungen der Zentralen oder Peripherieprozesse - selbständig oder auf Anforderung zu verändern (Anspruch 22).

In einem Interprozeßkommunikationsystem nach Anspruch 22 haben die Zentralen und Peripherieprozesse zusätzlich die Fähigkeit System-Informationen, welche die logische Struktur des Gesamtsystems definieren, selbständig oder auf Anforderung zu modifizieren. Überwachen ein oder mehrere Peripherieprozesse gleichzeitig vorgegebene Systemparameter, können sie die logische Struktur des Gesamtsystems im laufenden Betrieb veränderten Umweltbedingungen, Systemanforderungen oder System-belastungen anpassen. In einem Interprozeßkommunikationsystem nach Anspruch 22 kann beispielsweise ein Peripherieprozeß die Informationsmenge, welche über vorgegebene Verbindungen übertragen wird, sowie die Auslastung einzelner Zentralen oder System-Services überwachen. Werden vorgegebene Grenzwerte über- bzw. unterschritten, veranlaßt dieser Peripherieprozeß, daß
1. eine weitere Zentrale mit allen erforderlichen System-Services und Verbindungen gestartet wird, oder
2. ein Subsystem gestoppt wird, oder
3. eine weitere zusätzliche Verbindung zwischen zwei nicht direkt miteinander verbundenen Zentralen geschaffen wird, oder
4. bestehende Verbindungen zwischen Zentralen abgebaut werden.

Ein Interprozeßkommunikationsystem nach den beschriebenen Ansprüchen kann beliebig auf den Einheiten bestehender physikalischer Netzwerkinfrastrukturen, beispielsweise dem Internet oder ähnlichen Netzwerken, verteilt werden.

Der Ort der Einheiten innerhalb eines Netzwerkes ist vor allem im Zusammenhang mit Firewallschutzzonen von Bedeutung. Traditionelle Interprozeßkommunikationsysteme, welche nur einer ausgewählten Benutzergruppe zugänglich sein sollen, können nicht frei im Internet ausgeführt werden, sondern müssen durch Firewalls vor unauthorisierten Zugriffen geschützt werden. Dieser Nachteil wird durch erfindungsgemäße Interprozeßkommunikationsysteme - je nach Ausführungsort "Private Inter-, Intra- oder Extranets" genannt - behoben, da der Zugang zu den Peripherieprozessen und jede einzelne Nachricht durch die Zentralen kontrolliert werden kann, so daß erfindungsgemäße Systeme beliebig verteilt im Internet ausgeführt werden können ohne sich gegeneinander zu behindern und jedes erfindungsgemäße System nur einer ausgewählten Gruppe von Benutzern mit gegebenenfalls unterschiedlichen Rechten zugänglich ist.

Anspruch 23 betreffen das Interfacing zu bestehenden Interprozeßkommunikationsystemen nach dem Stand der Technik. In diesen Fällen besteht mindestens eine Verbindung zwischen mindestens einem erfindungsgemäßen Peripherieprozeß und mindestens einem Client oder einem Server nach dem Stand der Technik, so daß erfindungsgemäße Peripherieprozesse auf Daten oder Funktionen des Clients oder Servers nach dem Stand der Technik zugreifen können, ohne direkte Verbindungen aufbauen zu müssen.

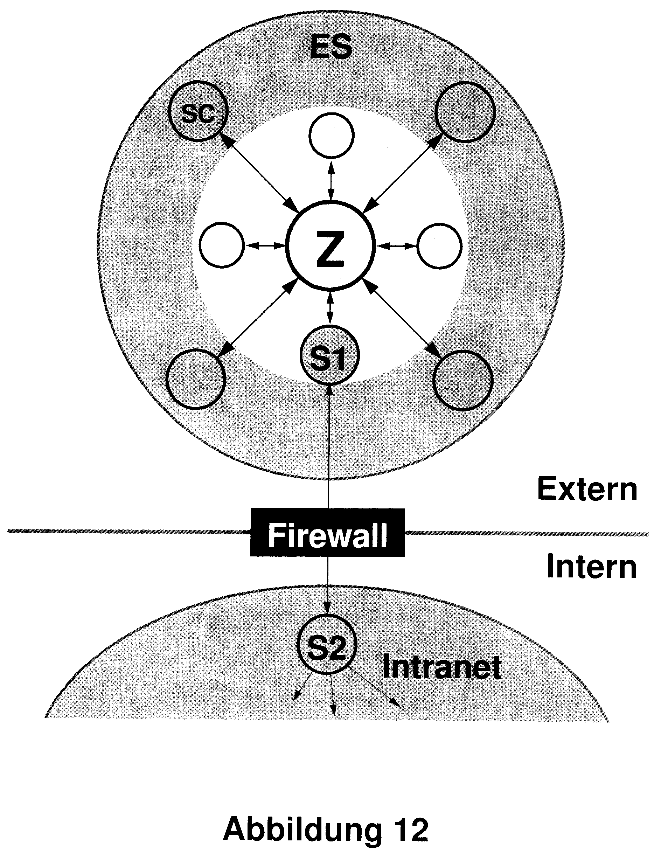

Besonders vorteilhaft ist in diesem Zusammenhang eine in Abbildung 12 wiedergegebene Ausführung. Ein externes erfingungsgemäßes System ES besitzt einen System-Service S1, welcher durch einen Firewall eine Verbindung zu einem internen (geschützten) Service nach dem Stand der Technik unterhält. Service-Client SC erhält über Zentrale Z und S1 die Möglichkeit auf ausgewählte Daten oder Funktionen von S2 zuzugreifen, ohne eine eigene Verbindung durch den Firewall zu S2 aufzubauen. Die Kontrolle, welche Daten und Transaktionen Service-Clients des externen Systems ES erhalten bzw. durchführen dürfen, bestimmt zum einen die logische Struktur von ES, die Funktionalitäten von S1 und S2 sowie der Firewall. Mit Hilfe eines solchen Systems läßt sich die Anzahl der Verbindungen, welche durch den Firewall hindurch aufgebaut werden müssen, drastisch (im Idealfall auf genau eine) reduzieren, so daß der Firewall wesentlich strengere Kriterien an den Verbindungsaufbau stellen kann und das interne Netzwerk wesentlich besser schützt, als wenn alle externen Clients eigene Verbindungen zu bestehenden internen Services aufbauen.

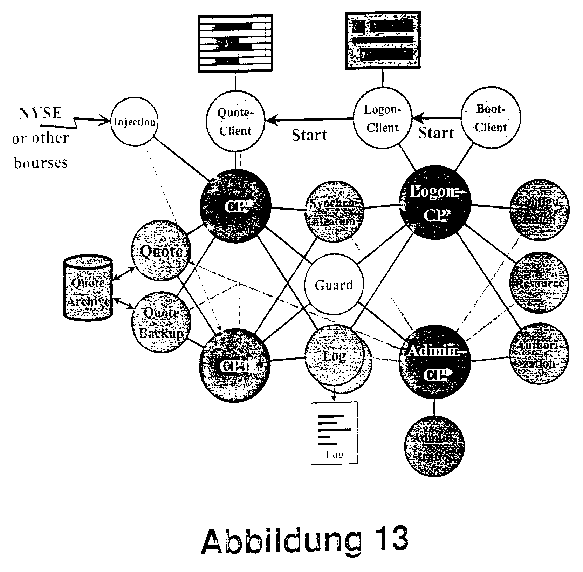

Abbildung 13 veranschaulicht beispielhaft ein logisches Interprozeßkommunikationsystem zur zuverlässigen Verteilung von Echtzeitbörsendaten im 24-Stunden Betrieb in verteilten Systemen. In der Abbildung entsprechen jeder Kreis einer Zerntale oder einem Periepherieprozess, jede durchgezogene Linie eine stehende logische bidirektionale Kommunikationsverbindung und jede gestrichelte Linie eine potetielle stehende logische bidirektionale Kommunikationsverbindung zwischen den entsprechenden Prozessen. Die Zentralen sind mit "CP", "CP1", "Logon-CP" und ""Admin-CP", die System-Services mit "Quote", "Quote-Backup", "Synchronization", "Log", "Configuration", "Resource", "Authorization" und die Service-Clients mit "Injection", "Quote-Client", "Logon-Client" und "Boot-Client" gekennzeichnet. Die Verteilung der Prozesse auf die unterliegenden physikalischen Einheiten ist beliebig, so können beispielsweise alle Prozesse auf einer einzigen physikalischen Einheit oder auf meheren Einheiten in einem einzigen oder mehreren physikalischen Subnetzen verteilt sein.

Das System besteht aus drei unabhängigen Subsystemen: 1. dem Logon-Subsystem bestehend aus der Zentrale "Logon-CP" und allen mit "Logon-CP" verbundenen Peripherieprozessen, 2. dem Administration-Subsystem bestehend aus der Zentrale "Admin-CP" und allen mit "Admin-CP" verbundenen Peripherieprozessen, 3. dem Börsendaten-Subsystem bestehend aus den beiden Zentralen "CP" und "CP1" sowie allen "CP" oder "CP1" verbundenen Peripherieprozessen.

Das Logon-Subsystem erlaubt den Start eines "Quote-Client"s Peripherieprozess von jeder authorisierten Peripherieeinheit mit minimaler lokaler Softwareinstallation auf genannter Peripherieeinheit. Der Start eines "Quote-Client" erfolgt in zwei Stufen: zuerst fordert ein "Boot-Client" eine Verbindung zu "Logon-CP" an. "Logon-CP authorisiert die Verbindungsanforderung mit Hilfe einer Transaction mit dem "Authorization"-Service und, falls die Authorisierungsprüfung positiv ausfällt, akzeptiert die Verbindungsanforderung des "Boot-Clients". Der "Boot-Client" läd vom "Configuration"-Service alle notwendigen Softwarebestandteile, wie z.B.: Programme, Bibliotheken, Nutzdaten, herunter, welcher zum Ausführen des "Logon-Client" notwendig sind. Nach erfolgreicher Installation aller erforderlichen Softwarekomponenten startet der "Boot-Client" den "Logon-Client" und terminiert sich selbst. Nach einer positiven Authorisierungsprüfung seitens des "Logon-CP" und des "Authorization"-Services verbindet sich der "Logon-Client" mit der "Logon-CP" und läd seinerseits von "Resource"-Service alle zum Aufbau des Logon-Schirmes benötigten Informationen herunter und zeigt schließlich den Logon-Schirm an. Der Logon-Schirm ermöglicht es einem Benutzer eine neue Benutzersession zu starten, seine Benutzerkennung und sein Password einzugeben, möglicherweise die Zentrale(n) auszuwählen zu welche die Session sich verbinden soll, und - nach einer positiven Authorisierungsprüfung der eingegebenen Benutzerdaten - die Softwarekomponenten herunterzuladen, welche zur Ausfürhung eines "Quote-Client"s benötigt werden, und schließlich den "Quote-Client" zu starten.

Der "Logon-Client" erlaubt es dem Benutzer soviele parallele Benutzersessions unter derselben oder verschiedenen Benutzerkennungen zu starten, wie es die physikalischen Ressources der lokalen Einheit erlauben. Der "Reource"-Service kann die GUI-Informationen auch für verschiedene Sprachen zur Verfügung stellen, so daß der Benutzer während des Betriebes einer Session zwischen verschiedenen verfügbaren Sprachen umschalten kann. Bei einer Sprachänderung läd der "Logon-Client" alle benötigten GUI-Ressourcen erneut vom "Resource"-Service und aktualisiert den Logon-Schirm in der neuen Sprache. Bei seinem Start erhält der "Quote-Client" als eine seiner Eingabeparameter die physikalische Identifikationen derjenigen Peripherieeinheiten, welche "CP"' und "CP1" ausführen, sowie die lokale Identifikationen der con "CP"' und "CP1" zur Verfügung gestellten Verbindungsendpunkte mitgeteilt. Mit diesen Information ist der "Quote-Client" in der Lage eine Verbindung entweder zu "CP"' oder zu "CP1" aufzubauen.

Das Börsendaten-Subsystem ist doppelt redundant aufgebaut in dem Sinne, als es aus redundanten Zentralen "CP" und "CP1" sowie redundanten System-Services "Quote" und "Quote-Backup" besteht. Beide "Quote"-Services bauen stehende logische Kommunikationsverbindungen zu "CP" und "CP1" auf. Während dem normalen Betrieb sind alle "Quote-Client"s und der "Injection"-Prozess mit "CP" verbunden. "Quote" ist der Master-System-Service und "Quote-Backup" wird als Backup-System-Service ausgeführt. Bei einem Ausfall von "CP" verbinden sich die "Quote-Client"s und der "Injection"-Prozess mit "CP1" so daß das System ohne weitere Totzeit fortfahren kann. Ein Ausfall von "Quote" wird von "CP" und "CP1" automatisch durch die unterbrochenen Verbindungen "Quote" entdeckt, so daßbeide Zentralen "Quote-Backup" als neuen Master-System-Service aktivieren. Dieser Vorgang benötgt weniger als 1s und ist vollständig transparent für "Quote-Client"s und den "Injection"-Prozess. Das Börsendatensubsystem überlebt sogar den gleichzeitigen Ausfall von "CP" und "Quote"-Service, da mit "CP1" und "Quote-Backup"-Service unmittelbar Alternativen bereitstehen.

Nachdem ein "Quote-Client" sich mit "CP" oder "CP1" verbunden hat, registriert er beim "Quote"-Service alle Namen von Börsendaten, welche er auf seinem Schirm anzeigt. Empfängt "Injection" ein neues Börsendatum von einer der Börsen, leitet es das neue Datum über "CP" oder "CP1" an den "Quote"-Service weiter. Die entsprechende Zentrale leitet das neue Datum an alle verbundenen "Quote"-Services ("Quote" und/oder "Quote-Backup") weiter. Der "Quote"-Service empfängt das neue Datum, aktualisiert seine internen Datenbestände. Jedesmal, wenn sich ein Datum ändert, für welches sich ein "Quote-Client" registriert hat, sendet der "Quote"-Service das aktuelle Datum an den entwsprechenden "Quote-Client", welcher seinerseits seine Anzeige akualisiert.

Der "Log"- und "Synchronization"-Service sind mit allen Zentralen des gesamten Systems verbunden. Der oder die "Log"-Service(s) sammeln alle Lag-Nachrichten von allen Subsystemen an einem zentralen Ort. Der "Synchronization"-Service synchronisiert die System-Uhren aller beteiligten Peripherieeinheiten in dem er in regelmäßigen Zeitintervallen Zeitnachrichten an alle beteiligten Prozesse versendet.

Das Administration-Subsystem besteht aus "Admin-CP" und dem "Administration"-Prozess. Alle System-Services sind über eine unabhängige stehende logische Kommunikationsverbindung mit "Admin-CP" verbunden und können administrative Transaktionsaufforderungen von "Administration" empfangen und die entsprechenden administrativen Aktionen ausführen.

Der Guard ist mit allen Zentralen verbunden und überwacht sowohl die Funktionalität der Zentralen als auch der System-Services. Einen Ausfall einer Zentrale erkennt der Guard unmittelbar an der Unterbrechung der entsprechenden Verbindung. Ein Ausfall eines System-Services wird zuerst von allen Zentralen entdeckt mit welchen der System-Service verbunden war. All Zentralen benachrichtigen den Guard über alle unterbrochenen Verbindungen zu einem System-Service. So kann der Guard bei einem Ausfall sowohl einer Zentrale als auch eines System-Services unmittelbar geeignete Maßnahmen einleiten, um den ausgefallenen Prozeß erneut zu starten.

## Patentansprüche

1. Interprozeßkommunikationssystem ablaufend auf einem Netzwerk bestehend aus mindestens einer Zentraleinheit und einer beliebigen Anzahl physikalisch mit einer Zentraleinheit verbundenen Peripherieeinheiten, wobei sowohl eine als auch mehrere direkte bidirektionale logische Kommunikationsverbindungen unter den Einheiten zwischen Peripherieprozessen, welche auf einer Peripherieeinheit oder einer Zentraleinheit ausgeführt werden, und mindestens einem auf einer Zentraleinheit ablaufenden Zentralprozeß - Zentrale genannt - aufbaubar sind,
**dadurch gekennzeichnet,** daß
i. genannte Kommunikationsverbindungen nach ihrem Aufbau stehende Kommunikationsverbindungen sind, und
ii. die Zentrale mindestens einer Verbindung mindestens eines mit der Zentrale verbundenen Peripherieprozesses mindestens eine logische Kennung derart zuordnet, daß ein Peripherieprozeß allein aufgrund dieser logischen Kennung(en) indirekt über die Zentrale mit mindestens einem Mitglied einer durch die logische Kennung(en) eindeutig bestimmten Gruppe von Peripherieprozessen kommunizieren kann.

2. Interprozeßkommunikationssystem nach Anspruch 1,
**dadurch gekennzeichnet,** daß
i. mindestens eine Zentraleinheit eine im gesamten Netzwerk eindeutige physikalische Kennung besitzt, und
ii. mindestens eine Zentrale zu jedem Zeitpunkt einen freien Verbindungsendpunkt zur Verfügung stellt, welcher Vebindungesendpunkt stets dieselbe auf der Zentraleinheit eindeutige lokale Kennung besitzt, und
iii. mindestens ein zum Auslösen eines Verbindungsaufbaues geeigneter Peripherieprozeß Mittel enthält, um mit alleiniger Kenntnis der physikalischen Kennung einer Zentraleinheit und der lokalen Kennung des Verbindungsendpunktes einer Zentrale selbständig Kommunikationsverbindung zu genannter Zentrale aufzubauen, und
iv. die Zentrale nur Verbindungen von zum Auslösen eines Verbindungsaufbaues geeigneten Peripherieprozessen akzeptiert, welche bestimmte beim Verbindungsaufbau und/oder zur Ausführungszeit bestehende Bedingungen, bezüglich der Ressourcen des Zentralprozesses und/oder der Art des Peripherieprozesses, und/oder der Benutzerkennung unter welcher der Peripherieprozeß ausgeführt wird, erfüllen und
v. die Zentrale mindestens einer Verbindung zu einem zum Auslösen eines Verbindungsaufbaus geeigneten Peripherieprozeß beim Verbindungsaufbau mindestens eine logische Kennung derart zuordnet, daß ein zum Auslösen eines Verbindungsaufbaus geeigneter Peripherieprozeß allein aufgrund dieser logischen Kennung(en) indirekt über die Zentrale mit mindestens einem Mitglied einer durch die logische Kennung(en) eindeutig bestimmten Gruppe von zum Auslösen eines Verbindungsaufbaus geeigneten Peripherieprozessen kommunizieren kann.

3. Interprozeßkommunikationssystem nach einem der Ansprüche 1 oder 2,
**dadurch gekennzeichnet,** daß
i. mindestens ein zur Aufnahme einer Verbindung geeigneter Peripherieprozeß mindestens einen freien Verbindungsendpunkt zur Verfügung stellt, welcher Vebindungesendpunkt eine, auf der den Peripherieprozeß ausführenden Einheit eindeutige, lokale Kennung besitzt, und
ii. der zur Aufnahme einer Verbindung geeignete Peripherieprozeß nur Verbindungen von der Zentrale akzeptiert, und
iii. jede der Einheiten, welche mindestens einen zur Aufnahme einer Verbindung geeigneten Peripherieprozeß ausführen, eine im gesamten Netzwerk eindeutige physikalische Kennung besitzen, und
iv. mindestens eine Zentrale eine Datenbasis besitzt, die mindestens einen Eintrag für einen zur Aufnahme einer Verbindung geeigneten Peripherieprozeß enthält und jeder Eintrag der Datenbasis mindestens die physikalische Kennung der Einheit sowie die lokale Kennung des Verbindungsendpunktes des entsprechenden zur Aufnahme einer Verbindung geeigneten Peripherieprozesses enthält, und
v. die Zentrale zum Auslösen eines Verbindungsaufbaus geeignet ist und selbständig Verbindungen zu solchen zur Aufnahme einer Verbindung geeigneten Peripherieprozessen aufbaut, welche in der Datenbasis enthalten sind und welche bestimmte beim Verbindungsaufbau bzw. zur Ausführungszeit bestehende Bedingungen, bezüglich der Ressourcen des Zentralprozesses und/ oder der Art des zur Aufnahme einer Verbindung geeigneten Peripherieprozesses, und/oder der Benutzerkennung unter welcher die zur Aufnahme einer Verbindung geeigneten Peripherieprozesse ausgeführt werden, erfüllen, und
vi. die Zentrale mindestens einer Verbindung zu einem zur Aufnahme einer Verbindung geeigneten Peripherieprozeß beim Verbindungsaufbau mindestens eine logische Kennung derart zuordnet, daß ein zur Aufnahme einer Verbindung geeigneter Peripherieprozeß allein aufgrund dieser logischen Kennung(en) indirekt über die Zentrale mit mindestens einem Mitglied einer durch die logische Kennung(en) eindeutig bestimmten Gruppe von zur Aufnahme einer Verbindung geeigneten oder zum Auslösen eines Verbindungsaufbaus geeigneten Peripherieprozessen kommunizieren kann.

4. Interprozeßkommunikationssystem nach Anspruch 2,
**dadurch gekennzeichnet,** daß
jede Peripherieeinheit, welche einen zum Auslösen eines Verbindungsaufbaues geeigneten Peripherieprozeß ausführt, eine im gesamten Netzwerk eindeutige physikalische Kennung besitzt und die Zentrale nur Verbindungen von solchen zum Auslösen eines Verbindungsaufbaues geeigneten Peripherieprozessen akzeptiert, welche zusätzlich bestimmte beim Verbindungsaufbau und/oder zur Ausführungszeit bestehende Bedingungen, bezüglich der Einheiten, auf welcher die zum Auslösen eines Verbindungsaufbaues geeigneten Peripherieprozesse ausgeführt werden, erfüllen.

5. Interprozeßkommunikationssystem nach einem der vorherigen Ansprüche,
**dadurch gekennzeichnet,** daß
die logische(n) Kennung(en), welche eine Verbindung zu einem Peripherieprozeß beim Verbindungsaufbau von einer Zentrale zugeordnet bekommt, in genannter Zentrale für den jeweiligen Peripherieprozeß eindeutig ist(sind), so daß ein Peripherieprozeß über eine Verbindung allein aufgrund dieser logischen Kennung(en) indirekt über die Zentrale mit einem eindeutig bestimmten Peripherieprozeß kommunizieren kann.

6. Interprozeßkommunikationssystem nach einem der vorherigen Ansprüche,
**dadurch gekennzeichnet,** daß
die logische(n) Kennung(en), welche eine Verbindung zu einem Peripherieprozeß beim verbindungsaufbau von einer Zentrale zugeordnet bekommt, in genannter Zentrale eindeutig ist(sind), so daß ein Peripherieprozeß über eine Verbindung allein aufgrund dieser logischen Kennungen indirekt über die Zentrale mit eindeutig bestimmten Verbindungen eines Peripherieprozesses kommunizieren kann.

7. Interprozeßkommunikationssystem nach einem der vorherigen Ansprüche,
**dadurch gekennzeichnet,** daß
die Bedingungen für die Akzeptanz einer Verbindung - Zugangsbedingungen genannt - seitens der Zentrale und/oder seitens der Peripherieprozesse während der Laufzeit des Systems veränderbar sind, und die Zentrale unmittelbar nach Neufestlegung der Zugangsbedingungen
i. Verbindungen zu bereits verbundenen Peripherieprozessen, welche die neu festgelegten Zugangsbedingungen nicht mehr erfüllen, automatisch trennt,
ii. Verbindungen zu bereits verbundenen Peripherieprozessen, welche nach den neuen Zugangsbedingungen erlaubt sind, bestehen läßt, und
iii. zuvor unverbundene zur Auslösung eines Verbindungsaufbaues geeigneten Peripherieprozesse, welche die neuen Zugangsbedingungen erfüllen, bei einem künftigen Verbindungsaufbau akzeptiert, oder nach den neuen Zugangsbedingungen erlaubte Verbindungen zu bisher unverbundenen zur Aufnahme einer Verbindung geeigneten Peripherieprozessen, welche in der Datenbasis der Zentrale enthalten sind, selbständig aufbaut.

8. Interprozeßkommunikationssystem nach einem der Ansprüche 2 bis 7,
**dadurch gekennzeichnet,** daß
zum Auslösen eines Verbindungsaufbaues geeignete Peripherieprozesse, wie sie in den Ansprüchen 2 und 4 enthalten sind, ihre Verbindungen zur Zentrale im Falle einer Verbindungsunterbrechung selbständig wieder herstellen, und
daß eine zum Auslösen eines Verbindungsaufbaues geeignete Zentrale, wie sie in Anspruch 3 enthalten ist, die Verbindung zu einem zur Aufnahme einer Verbindung geeigneten Peripherieprozeß, wie er in Anspruch 3 enthalten ist, im Falle einer Verbindungsunterbrechung selbständig wieder herstellt.

9. Interprozeßkommunikationssystem nach den vorherigen Ansprüchen,
**dadurch gekennzeichnet,** daß
die Zentrale Nachrichten, welche ein Peripherieprozeß - Sender genannt - über eine Verbindung - Sendeverbindung genannt an die Zentrale schickt und welche Nachrichten
i. die logische Kennung mindestens einer Verbindung eines Peripherieprozesses - Empfangsverbindung genannt - enthalten, nach positiv ausgefallenen Authorisierungsprüfungen via den in der Nachricht angegebenen Empfangsverbindungen zusammen mit der logischen Kennung der Sendeverbindung an die entsprechenden Peripherieprozesse - Empfänger genannt - weiterleitet und nach negativ ausgefallenen Authorisierungsprüfungen vernichtet und den Sender selbständig oder auf dessen Anforderung über die Ablehnung der Weiterleitung seiner Nachricht unterrichtet und welche Nachrichten
ii. keine logische Kennungen von Empfangsverbindungen enthalten, entweder vernichtet, speichert, an die Sendeverbindung zurück sendet, oder nach einer positiv ausgefallenen Authorisierungsprüfung an alle mit der Zentrale verbundenen Verbindungen von Peripherieprozessen mit Ausnahme der Sendeverbindung weiterleitet,
und daß die Zentrale den Sender einer Nachricht selbständig oder auf dessen Anforderung über alle Empfänger informiert, zu welchen die Nachricht weitergeleitet wurde und/oder nicht weitergeleitet werden konnte.

10. Interprozeßkommunikationssystem nach einem der vorherigen Ansprüche,
**dadurch gekennzeichnet,** daß
die Zentrale Nachrichten an bekannte aber temporär nicht mit ihr verbundene Empfänger entweder
i. zwischenspeichert und die zwischengespeicherten Nachrichten automatisch oder auf Anforderung nach Wiederverbindung des temporär unverbundenen Empfängers mit der Zentrale in der Reihenfolge ihres Empfanges seitens der Zentrale oder einer anderen Reihenfolge an den Empfänger weiterleitet, oder
ii. an den Sender zurückschickt, oder
iii. vernichtet.

11. Interprozeßkommunikationssystem nach einem der vorherigen Ansprüche,
**dadurch gekennzeichnet**, daß
i. mindestens ein Peripherieprozeß - System-Service genannt nach dem Verbindungsaufbau über eine Verbindung - System-Service-Verbindung genannt - zur Zentrale auf eine eintreffende Transaktionsaufforderung wartet, nach dem Eintreffen einer solchen Aufforderung eine in Abhängigkeit von genannter Aufforderung vordefinierte Aktion durchführt und gegebenenfalls nach Ausführen dieser Aktion ein Resultat an den Sender der erwähnten Aufforderung sendet, anschließend auf die nächste eintreffende Transaktionsaufforderung wartet und diesen Zyklus endlos wiederholt, oder daß
ii. mindestens ein Peripherieprozeß - Service-Client genannt nach dem Verbindungsaufbau über eine Verbindung - Service-Client-Verbindung genannt - zur Zentrale selbsttätig oder auf Anforderung eine in Abhängigkeit seiner Aufgaben geartete Transaktionsaufforderung an einen oder mehrere System-Services sendet, gegebenenfalls Resultate der System-Services empfängt und dies in Abhängigkeit seiner Aufgaben und den erhaltenen Resultaten beliebig oft wiederholt, oder daß
iii. mindestens ein Peripherieprozeß - Guard genannt - in regelmäßigen oder unregelmäßigen Abständen die Funktionalität mindestens einer Zentrale oder einzelner oder mehrerer Peripherieprozesse testet und im Falle einer Dysfunktion Maßnahmen ergreift, um diese Dysfunktion zu beheben oder anderen Peripherieprozessen des Interprozeßkommunikationssystems mitzuteilen, wobei ein Peripherieprozeß auch über mindestens zwei Verbindungen mit der Zentrale verbunden sein kann, und für jede der genannten Verbindungen entweder die Funktionalität eines System-Services, eines Service-Clients oder eines Guards bereitstellt.

12. Interprozeßkommunikationssystem nach einem der vorhergehenden Ansprüche,
**dadurch gekennzeichnet,** daß
i. auf einer oder mehreren von allen Peripherieeinheiten erreichbaren Zentraleinheiten, mehrere gleichartige Zentralprozesse parallel ausgeführt werden,
ii. von mindestens einem zum Aufbau einer Verbindung geeigneten Peripherieprozeß, wie er in Ansprüchen 2 oder 4 enthalten ist, - insbesondere einem System-Service - mehrere parallele stehende Verbindungen zu einer oder mehreren Zentralen aufgebaut werden oder zu mindestens einem zur Aufnahme einer Verbindung geeigneten Peripherieprozeß, wie er in Anspruch 3 enthalten ist, - insbesondere einem System-Service - mehrere parallele stehende Verbindungen von einer oder mehreren Zentralen aufgebaut werden, und daß
iii. zum Aufbau einer Verbindung geeignete Peripherieprozesse, wie er in Ansprüchen 2 oder 4 enthalten sind, sich bei Ausfall einer Zentrale, mit welcher sie verbunden waren, automatisch mit mindestens einer der anderen Zentralen verbinden, und daß
iv. Guards mehrere Zentralprozesse gleichzeitig überwachen können.

13. Interprozeßkommunikationssystem nach einem der vorgehenden Ansprüche,
**dadurch gekennzeichnet,** daß
mehrere gleichartige System-Services gleichzeitig parallel ausgeführt werden und parallele stehende Verbindungen zu einer oder mehreren Zentralen aufbauen bzw. von einer oder mehreren Zentralen akzeptieren, wobei jede Zentrale allen gleichartigen System-Services mindestens eine für alle gleichartigen System-Services der jeweiligen Zentrale identische logische Kennung Service-Kennung genannt - zuordnet, wobei die Service-Kennungen derselben System-Services in verschiedenen Zentralen verschieden oder in allen Zentralen gleich sein können.

14. Interprozeßkommunikationssystem nach Anspruch 13,
**dadurch gekennzeichnet,** daß
jede Zentrale alle an eine Service-Kennung gerichteten Transaktionsaufforderungen an mindestens einen gleichartigen System-Services mit derselben Service-Kennung weiterleitet,
und daß die Zentrale die Transaktionsresultate einer Transaktionsaufforderung aller gleichartigen System-Services mit derselben Service-Kennung empfängt, und daß entweder die Zentrale in geeigneter Weise das endgültige Transaktionsresultat bestimmt, welches sie an den Service-Client weiterleitet, welcher die Transaktionsaufforderung gesendet hat, oder daß die Zentrale alle voneinander verschiedenen Transaktionsresultate zusammen mit ihrer Häufigkeitsverteilung an genannten Service-Client weiterleitet, welcher die Transaktionsaufforderung gesendet hat, und genannter Service-Client daraus das endgültige Transaktionsresultat in geeigneter Weise bestimmt, oder daß genannter Service-Client, welcher die Transaktionsaufforderung gesendet hat, alle eintreffenden Transaktionsresultate empfängt und das endgültige Transaktionsresultat in geeigneter Weise bestimmt.

15. Interprozeßkommunikationssystem nach Anspruch 13,
**dadurch gekennzeichnet,** daß
jede Zentrale alle an eine Service-Kennung gerichteten Transaktionsaufforderungen an alle gleichartigen System-Services mit derselben Service-Kennung weiterleitet, und daß jede Zentrale genau einen der gleichartigen System-Services als Master-System-Service für die jeweilige Zentrale bestimmt wird, und daß der Master-System-Service gegebenenfalls das Transaktionsresultat an einen Service-Client sendet, und daß alle gleichartigen System-Services einer Zentrale mit derselben Service-Kennung wie ein Master-System-Service bis auf den Master-System-Service selbst nur zur Sicherung des Master-System-Services im Hintergrund ausgeführt werden, und die Transaktionsaufforderungen zum Abgleich ihrer internen Daten zwar empfangen und gegebenenfalls verarbeiten, jedoch keine Transaktionsresultate an Service-Clients senden, so daß bei Abbruch der Verbindung zwischen dem Master-System-Service einer Zentrale einer der gleichartigen Hintergrund-System-Services mit derselben Service-Kennung wie der Master-System-Service von der Zentrale als neuer Master-System-Service für diese Zentrale derart bestimmt wird, daß das Gesamtsystem für alle Service-Clients transparent ohne Unterbrechung fortfährt, und daß ein im Hintergrund-Modus ausgeführter System-Service seine internen Daten mit den internen Daten desjenigen Master-System-Service mit derselben logischen Kennung des genannten Hintergrund-System-Services selbständig oder auf Anforderung mindestens einmal synchronisiert.

16. Interprozeßkommunikationssystem bestehend aus mindestens zwei Subnetzsystemen,
**dadurch gekennzeichnet,** daß
jedes der Subnetzsysteme nach einem der Ansprüche 2 bis 15 ausgebildet ist, und daß die Subzentralen entweder direkt durch zueinander stehende bidirektionale Verbindungen oder indirekt durch spezielle Peripherieprozesse - Links genannt welche parallele Verbindungen zu zwei oder mehreren Subnetzwerkzentralen - Subzentralen genannt - aufbauen, zu einer beliebigen definierten Topologie verbindbar sind, und daß die Subzentralen Nachrichten, welche an eine logische Kennung einer Verbindung eines Peripherieprozesses zu einer anderen Subzentrale gerichtet sind, an diejenige Subzentrale weiterleiten, zu welcher die durch genannte logische Kennung bestimmte Verbindung besteht.

17. Interprozeßkommunikationssystem nach Anspruch 16,
**dadurch gekennzeichnet,** daß
jede Subzentrale eine mindestens in ihrer unmittelbaren Umgebung - d.h. für alle mit genannter Subzentrale direkt oder indirekt über genau einen Link verbundenen Subzentralen eindeutige logische Kennung besitzt, und daß die Subzentralen Nachrichten an Empfänger, welche mit anderen Subzentralen verbunden sind als der Sender, an die Subzentralen der Empfänger weiterleiten, wobei jede Adresse der Nachrichtenempfänger zusätzlich zur logischen Kennung des Empfängers eine eine oder mehrere Subzentralenkennungen umfassende Folge enthalten, diese Folge beschreibt, über welche Subzentralen der Empfänger erreichbar ist, und die Subzentralen die Nachrichten immer zur Subzentrale des jeweils in der Folge nächsten Subnetzsystems direkt oder indirekt via einem Link weiterleiten, bis die Nachrichten die letzte Subzentrale der Folge erreicht haben und von letzterer Subzentrale zusammen mit der umgekehrten Folge von Subzentralenkennungen an den Empfänger weitergeleitet werden.

18. Interprozeßkommunikationssystem nach Anspruch 16,
**dadurch gekennzeichnet,** daß
jeder Link eine mindestens in seiner unmittelbaren Umgebung - d.h. für alle mit genanntem Link verbundenen Subzentralen - eindeutige logische Kennung besitzt, und daß die Subzentralen Nachrichten an Empfänger, welche mit anderen Subzentralen verbunden sind als der Sender, an die Subzentralen der Empfänger weiterleiten, wobei jede Adresse der Nachrichtenempfänger zusätzlich zur logischen Kennung des Empfängers eine eine oder mehrere Linkkennungen umfassende Folge enthalten, diese Folge beschreibt, über welche Links der Empfänger erreichbar ist, und die Subzentralen Nachrichten immer zum in der Folge nächsten Link weiterleiten, und dieser Link die Nachrichten an die jeweils andere mit ihm verbundene Subzentrale weiterleitet, bis die Nachrichten diejenige Subzentrale erreicht haben, mit welcher der Empfänger verbunden ist, und von letzterer Subzentrale zusammen mit der umgekehrten Folge von Linkkennungen an den Empfänger weitergeleitet werden.

19. Interprozeßkommunikationssystem nach einem der Ansprüche 16 bis 18,
**dadurch gekennzeichnet,** daß
die Links oder subzentralen eine Auswahl von Nachrichten, die von einem Subnetzsystem zu einem anderen weitergeleitet werden dürfen, anhand von Kriterien - Politik genannt - vornehmen, und daß genannte Politiken entweder für alle Links und/oder Subzentralen identisch sind oder für verschiedene Links und/oder Subzentralen verschieden sind, und daß die Politik eines einzelnen Links und/oder Subzentrale während der Laufzeit des Systems fest vorgegeben oder veränderbar ist, und daß die Links und/oder Subzentralen ihre Politik auf Anforderung oder selbständig in regelmäßigen oder unregelmäßigen Abständen untereinander austauschen und ihre eigene Politik in Abhängigkeit von den Politiken der anderen Links und/oder Subzentralen aktualisieren, und daß die Politik der einzelnen Links und/oder Subzentralen mindestens von der Qualität der Nachricht, von der Art des Senders und/oder der Art des Empfängers und/oder dem Benutzer des Senders und/oder dem Quellsystem und/oder dem Zielsystem und/oder der Übertragungseinrichtungen zwischen den Subnetzsystemen abhängt.

20. Interprozeßkommunikationssystem nach einem der Ansprüche 16 bis 19,
**dadurch gekennzeichnet,** daß
mindestens ein Peripherieprozeß - insbesondere ein System-Service - nach einem der Ansprüche 2 oder 4 gleichzeitig parallele Kommunikationsverbindungen zu Zentralen mindestens zweier Subnetzsysteme aufbaut und/ oder daß mindestens ein Peripherieprozeß - insbesondere ein System-Service - nach Anspruch 3 Verbindungen von den Zentralen mindestens zweier Subnetzsysteme akzeptiert.

21. Interprozeßkommunikationssystem nach einem der vorherigen Ansprüche,
**dadurch gekennzeichnet,** daß
die logische Struktur fest vorgegeben ist und daß mindestens einem System-Service die Informationen, welche Peripherieprozesse und/oder System-Services und/oder Links und/oder Zentralen mit welcher Zentrale verbunden sind, zugänglich sind und daß genanntem System-Service die Informationen, welchen Peripherieprozessen und/oder System-Services und/oder Links und/oder Zentralen es erlaubt ist mit welcher Zentrale Verbindungen aufzubauen bzw. welche Zentrale zu welchen Peripherieprozessen und/oder System-Services und/oder Links und/oder Zentralen Verbindungen aufbauen darf, zugänglich sind und daß genanntem System-Service die Kriterien der Authorisierungsprüfungen, welche die Zentralen vor der Weiterleitung der Nachrichten durchführen, und/oder die Übertragungspolitiken der Links und/oder Zentralen zugänglich sind und genannter System-Service genannte System-Informationen anderen Peripherieprozessen zur Verfügung stellt.

22. Interprozeßkommunikationssystem nach einem der vorherigen Ansprüche 1 bis 20,
**dadurch gekennzeichnet,** daß
die logische Struktur modifizierbar ist und daß mindestens ein System-Service die Informationen, welche Peripherieprozesse und/ oder System-Services und/oder Links und/oder Zentralen mit welcher Zentrale verbunden sind und/oder welchen Peripherieprozessen und/oder System-Services und/oder Links und/oder Zentralen es erlaubt ist mit welcher Zentrale Verbindungen aufzubauen bzw. welche Zentrale zu welchen Peripherieprozessen und/oder System-Services und/oder Links und/oder Zentralen Verbindungen aufbauen darf, modifizieren kann und daß genannter System-Service die Kriterien der Authorisierungsprüfungen, welche die Zentralen vor der Weiterleitung der Nachrichten durchführen, und/oder die Übertragungspolitiken der Links und/oder Zentralen modifizieren kann und daß die betroffenen Zentralen und/oder Links und/oder Peripherieprozesse die modifizierten System-Informationen unmittelbar übernehmen.

23. Interprozeßkommunikationssystem nach einem der vorherigen Ansprüche,
**dadurch gekennzeichnet,** daß
mindestens ein Peripherieprozeß mindestens eine Verbindung zu mindestens einem Service nach dem Stand der Technik - traditioneller Service genannt - aufbaut und/oder daß mindestens ein Peripherieprozeß mindestens eine Verbindung von mindestens einem Client nach dem Stand der Technik - traditioneller Client genannt - akzeptiert, wobei mindestens eine Verbindung zwischen einem Peripherieprozeß und einem traditionellen Client und/oder traditionellen Service durch einen Firewall hindurch führen kann und daß mindestens ein Peripherieprozeß, welcher mit mindestens einem traditionellen Service und/oder Client verbunden ist, Daten oder Funktionen des(r) traditionellen Service(s) und/oder Clients anderen Peripherieprozessen zur Verfügung stellt, so daß genannte andere Peripherieprozesse Zugriff auf die Daten und Funktionen des(r) traditionellen Services und/oder Clients erhalten ohne direkte Verbindungen zu genanntem(n) traditionellen Service(s) und/oder Clients aufzubauen.
